# EUROPEAN PATENT APPLICATION

(11) **EP 4 307 109 A1**
(43) Date of publication of application: **17.01.2024**
(21) Application number: 21929548.2
(22) Date of filing: 10.03.2021
(51) Int. Cl.: G06F 8/65, G06F 21/44

(54) **METHOD AND APPARATUS FOR ACQUIRING LICENSE INFORMATION, AND STORAGE MEDIUM AND CHIP SYSTEM**

(71) Applicant: Huawei Technologies Co., Ltd., Longgang Shenzhen, Guangdong 518129 (CN)
(72) Inventor: WANG, Yong, Shenzhen, Guangdong 518129 (CN); CHEN, Youlei, Shenzhen, Guangdong 518129 (CN); ZHOU, Zheng, Shenzhen, Guangdong 518129 (CN); MA, Tao, Shenzhen, Guangdong 518129 (CN)
(74) Representative: Huawei European IPR
(86) International application number: PCT/CN2021/080024
(87) International publication number: WO 2022/188069

(57) **Abstract**

This application provides a method for obtaining permission information, an apparatus, a storage medium, and a chip system, to reduce a quantity of notification messages sent in an upgrade process that is based on an upgrade package. In this application, first permission information corresponding to a first upgrade package is obtained. The first permission information indicates whether to perform a first operation in an upgrade process that is based on the first upgrade package. Whether to notify a user to perform the first operation in an upgrade process that is based on a second upgrade package is determined based on the first permission information, so that a quantity of notification messages sent in the upgrade process is reduced.

## Description

### TECHNICAL FIELD

This application relates to the communication field, and in particular, to a method for obtaining permission information, an apparatus, a storage medium, and a chip system.

### BACKGROUND

In actual application, software or firmware of a terminal device may need to be upgraded to improve performance of the terminal device. For example, the software or firmware may be upgraded based on an over the air (over the air, OTA) technology. The OTA is a technology for downloading data through a wireless network, and has been widely applied to a network upgrade of devices such as a smart television, a mobile phone, a tablet computer, and a set-top box. With development of the internet of vehicles, OTA-based online upgrade becomes an important function of an internet of vehicles terminal device. An original equipment manufacturer (original equipment manufacturer, OEM) can upgrade related software or firmware of the internet of vehicles terminal device through the OTA function. This helps the manufacturer reduce recall costs, quickly respond to requirements, and improve user experience.

In an existing upgrade process of the internet of vehicles terminal device, upgrade types usually include: a silent upgrade and a regular upgrade. In the silent upgrade, information such as download and installation of an upgrade package does not need to be determined by a user. However, in the regular upgrade, for each step such as download and installation of an upgrade package, a notification message needs to be sent to the user, to notify the user to determine content such as whether to permit creation of an upgrade task, whether to permit download of the upgrade package, and whether to permit installation of the upgrade package.

Currently, after delivery of the internet of vehicles terminal device, basically all upgrade packages are upgraded in a regular upgrade manner. In this case, a large quantity of notification messages need to be sent to the user, to obtain permission information of the user. Based on this, a solution is urgently required to reduce sending of the notification messages.

### SUMMARY

To reduce a quantity of notification messages sent in an upgrade process, this application provides a method for obtaining permission information, an apparatus, a storage medium, and a chip system. In this application, for a first operation involved in an upgrade process that is based on a second upgrade package, whether a notification message needs to be sent to a user may be determined based on first permission information of a first upgrade package. Compared with a solution in which a notification message needs to be sent to the user for a first operation of each upgrade package, in this application, a quantity of notification messages sent to the user can be reduced.

According to a first aspect, this application provides a method for obtaining permission information of a user in an upgrade process. In the method, a network device obtains first permission information corresponding to a first upgrade package. The first permission information indicates whether to perform a first operation in an upgrade process that is based on the first upgrade package. The network device generates, based on the first permission information, permission policy information for a second upgrade package. The permission policy information indicates whether to notify the user to perform the first operation in an upgrade process that is based on the second upgrade package. It is determined, based on the first permission information, whether to notify the user to perform the first operation in the upgrade process that is based on the second upgrade package. Therefore, compared with a solution in which a notification message needs to be sent to the user for the first operation of each upgrade package, in this application, a quantity of notification messages sent to the user can be reduced.

In a possible implementation of the first aspect, after that the network device generates permission policy information for a second upgrade package, the method further includes: The network device sends the permission policy information. In this way, the upgrade package may be upgraded based on the permission policy information on a terminal device side.

In a possible implementation of the first aspect, the first operation includes at least one of download of an upgrade package or installation of an upgrade package. Operations in an upgrade process that is based on an upgrade package mainly include download of the upgrade package and installation of the upgrade package. This solution may be more compatible with an existing technology.

In a possible implementation of the first aspect, when the first permission information indicates to perform the first operation in the upgrade process that is based on the first upgrade package, the permission policy information indicates that there is no need to notify the user to perform the first operation in the upgrade process that is based on the second upgrade package. Because the first permission information indicates to perform the first operation in the upgrade process that is based on the first upgrade package, it may be inferred that the user also allows execution of the first operation in the upgrade process that is based on the second upgrade package. Therefore, it may be determined that there is no need to notify the user to determine whether to perform the first operation, thereby reducing a quantity of notification messages sent to the user.

In a possible implementation of the first aspect, when the first permission information indicates not to perform the first operation in the upgrade process that is based on the first upgrade package, the permission policy information indicates to notify the user to perform the first operation in the upgrade process that is based on the second upgrade package. Because the first permission information indicates not to perform the first operation in the upgrade process that is based on the first upgrade package, there is a need to notify the user to determine whether to perform the first operation, thereby reducing a quantity of notification messages sent to the user.

In a possible implementation of the first aspect, the network device obtains period information of the first permission information. The network device generates, based on the first permission information and the period information of the first permission information, the permission policy information corresponding to the second upgrade package. In this way, whether the user allows execution of the first operation in the upgrade process that is based on the second upgrade package may be more accurately inferred with reference to the period information of the first permission information.

In a possible implementation of the first aspect, a period indicated by the period information of the first permission information is a validity period of the first permission information. When the first permission information indicates to perform the first operation in the upgrade process that is based on the first upgrade package, the upgrade process based on the second upgrade package is to be performed within the period indicated by the period information of the first permission information, and the permission policy information indicates that there is no need to notify the user to perform the first operation in the upgrade process that is based on the second upgrade package. In this way, the user inputs the period information of the first permission information to indicate whether a notification needs to be sent to the user within a time period, thereby reducing a quantity of notification messages sent to the user within the validity period of the first permission information.

In another possible implementation, a period indicated by the period information of the first permission information is an affective term of the first permission information. When the first permission information indicates to perform the first operation in the upgrade process that is based on the first upgrade package, the upgrade process based on the second upgrade package is not to be performed within the period indicated by the period information of the first permission information, and the permission policy information indicates to notify the user to perform the first operation in the upgrade process that is based on the second upgrade package. In this way, when the validity period of the first permission information expires, permission information of the user may be obtained in a manner of querying the user again, so that the solution is more appropriate and more secure and reliable for the user.

In a possible implementation of the first aspect, to improve flexibility of the solution, the period indicated by the period information of the first permission information meets any one of the following conditions: a period corresponding to the upgrade process that is based on the first upgrade package; a preset time period; or permanence.

In a possible implementation of the first aspect, when the permission policy information indicates to notify the user to perform the first operation in the upgrade process that is based on the second upgrade package, the permission policy information further includes first indication information. The first indication information indicates a terminal device to send a first notification message. The first notification message notifies the user to determine period information of second permission information. The second permission information is information that indicates whether execution of the first operation is allowed and that is input by the user in the upgrade process that is based on the second upgrade package. In this way, the user inputs the period information of the second permission information to indicate whether a notification needs to be sent to the user within a time period, thereby reducing a quantity of notification messages sent to the user within a validity period of the second permission information.

In a possible implementation of the first aspect, when the permission policy information indicates to notify the user to perform the first operation in the upgrade process that is based on the second upgrade package, the permission policy information further includes second indication information. The second indication information indicates the terminal device to send a second notification message. The second notification message notifies the user to determine a type of an upgrade package to which the second permission information is applicable. In this way, the user limits the second permission information through inputting the type of the upgrade package to which the second permission information is applicable, to reduce a quantity of subsequent notification messages sent for the upgrade package to which the second permission information is applicable.

In a possible implementation of the first aspect, a type of the first upgrade package is the same as a type of the second upgrade package. In this way, it may be inferred, based on data packets of a same type, whether the first operation in the upgrade process that is based on the second data packet is allowed by the user, thereby improving inference accuracy.

In a possible implementation of the first aspect, to improve flexibility of the solution, a type of the second upgrade package is determined based on at least one of the following content: an application to which the second upgrade package belongs; a type of an application to which the second upgrade package belongs; function information corresponding to the second upgrade package; or component information corresponding to the second upgrade package.

According to a second aspect, this application provides a method for obtaining permission information of a user in an upgrade process. In the method, a terminal device receives permission policy information for a second upgrade package. The permission policy information indicates whether to notify the user to perform a first operation in an upgrade process that is based on the second upgrade package. The terminal device obtains first permission information corresponding to a first upgrade package. The first permission information indicates whether to perform the first operation in an upgrade process that is based on the first upgrade package. The terminal device determines, based on the first permission information and the permission policy information, whether to notify the user to perform the first operation in the upgrade process that is based on the second upgrade package. Whether to notify the user to perform the first operation in the upgrade process that is based on the second upgrade package is determined based on the first permission information. Therefore, compared with a solution in which a notification message needs to be sent to the user for the first operation of each upgrade package, in this application, a quantity of notification messages sent to the user can be reduced.

In a possible implementation of the second aspect, the first operation includes at least one of download of an upgrade package or installation of an upgrade package. Operations in an upgrade process that is based on an upgrade package mainly include download of the upgrade package and installation of the upgrade package. This solution may be more compatible with an existing technology.

In a possible implementation of the second aspect, that the terminal device determines, based on the first permission information and the permission policy information, whether to notify the user to perform the first operation in the upgrade process that is based on the second upgrade package includes: When the permission policy information indicates that there is no need to notify the user to perform the first operation in the upgrade process that is based on the second upgrade package, the terminal device performs the first operation. This solution may belong to a silent upgrade. In this case, the first permission information may no longer be obtained.

In a possible implementation of the second aspect, that the terminal device determines, based on the first permission information and the permission policy information, whether to notify the user to perform the first operation in the upgrade process that is based on the second upgrade package includes: When the permission policy information indicates to notify the user to perform the first operation in the upgrade process that is based on the second upgrade package, the terminal device determines, based on the first permission information, whether to notify the user to perform the first operation in the upgrade process that is based on the second upgrade package. This upgrade process may belong to a regular upgrade. For such an upgrade, whether to notify the user may be determined with reference to the first permission information, thereby reducing a quantity of notification messages sent in a regular upgrade process.

In a possible implementation of the second aspect, that the terminal device determines, based on the first permission information and the permission policy information, whether to notify the user to perform the first operation in the upgrade process that is based on the second upgrade package includes: When the permission policy information indicates to notify the user to perform the first operation in the upgrade process that is based on the second upgrade package, and the first permission information indicates to perform the first operation in the upgrade process that is based on the first upgrade package, the terminal device performs the first operation. In this way, although the permission policy information indicates that there is a need to notify the user, the user may not be notified based on the first permission information, and the first operation is directly performed, thereby reducing a quantity of sent notification messages.

In a possible implementation of the second aspect, that the terminal device determines, based on the first permission information and the permission policy information, whether to notify the user to perform the first operation in the upgrade process that is based on the second upgrade package includes: When the permission policy information indicates to notify the user to perform the first operation in the upgrade process that is based on the second upgrade package, and the first permission information indicates that the first operation is not performed in the upgrade process that is based on the first upgrade package, the terminal device sends a third notification message in the upgrade process that is based on the second upgrade package. The third notification message notifies the user to perform the first operation. The terminal device receives second permission information. The second permission information indicates whether to perform the first operation in the upgrade process that is based on the second upgrade package. When the second permission information indicates to perform the first operation in the upgrade process that is based on the second upgrade package, the terminal device performs the first operation. In this way, when the first permission information indicates that the user does not allow execution of the first operation, a notification message may be sent again to query the user, thereby improving rationality of the solution.

In a possible implementation of the second aspect, that the terminal device determines, based on the first permission information and the permission policy information, whether to notify the user to perform the first operation in the upgrade process that is based on the second upgrade package includes: When the permission policy information indicates to notify the user to perform the first operation in the upgrade process that is based on the second upgrade package, the terminal device obtains period information of the first permission information; and the terminal device determines, based on the first permission information and the period information of the first permission information, whether to notify the user to perform the first operation in the upgrade process that is based on the second upgrade package. In this way, whether the user allows execution of the first operation in the upgrade process that is based on the second upgrade package may be more accurately inferred with reference to the period information of the first permission information.

In a possible implementation of the second aspect, a period indicated by the period information of the first permission information is a validity period of the first permission information. That the terminal device determines, based on the first permission information and the period information of the first permission information, whether to notify the user to perform the first operation in the upgrade process that is based on the second upgrade package includes: When the first permission information indicates to perform the first operation in the upgrade process that is based on the first upgrade package, and the upgrade process based on the second upgrade package is to be performed within the period indicated by the period information of the first permission information, the terminal device performs the first operation. In this way, the user inputs the period information of the first permission information to indicate whether a notification needs to be sent to the user within a time period, thereby reducing a quantity of notification messages sent to the user within the validity period of the first permission information.

In a possible implementation of the second aspect, that the terminal device determines, based on the first permission information and the period information of the first permission information, whether to notify the user to perform the first operation in the upgrade process that is based on the second upgrade package includes: When the first permission information indicates to perform the first operation in the upgrade process that is based on the first upgrade package, and the upgrade process based on the second upgrade package is not to be performed within the period indicated by the period information of the first permission information, the terminal device sends a third notification message in the upgrade process that is based on the second upgrade package. The third notification message notifies the user to perform the first operation. The terminal device receives second permission information. The second permission information indicates whether to perform the first operation in the upgrade process that is based on the second upgrade package. When the second permission information indicates to perform the first operation in the upgrade process that is based on the second upgrade package, the terminal device performs the first operation. In this way, when the validity period of the first permission information expires, permission information of the user may be obtained in a manner of querying the user again, so that the solution is more appropriate and more secure and reliable for the user.

In a possible implementation of the second aspect, to improve flexibility of the solution, the period information of the first permission information meets any one of the following conditions: a period corresponding to the upgrade process that is based on the first upgrade package; a preset time period; or permanence.

In a possible implementation of the second aspect, after that the terminal device receives second permission information, the method further includes: The terminal device sends a first notification message, where the first notification message notifies the user to input period information of the second permission information; and the terminal device receives the period information of the second permission information. In this way, the user inputs the period information of the second permission information to indicate whether a notification needs to be sent to the user within a time period, thereby reducing a quantity of notification messages sent to the user within a validity period of the second permission information.

In a possible implementation of the second aspect, that the terminal device sends a first notification message includes: The terminal device displays the first notification message on a display. The first notification message includes at least one of the following content: The second permission information is valid only in the upgrade process that is based on the second upgrade package; the second permission information is valid within a preset time period; or the second permission information is permanently valid.

In a possible implementation of the second aspect, after that the terminal device receives second permission information, the method further includes: The terminal device sends a second notification message. The second notification message notifies the user to input a type of an upgrade package to which the second permission information is applicable. In this way, the user limits the second permission information through inputting the type of the upgrade package to which the second permission information is applicable, to reduce a quantity of subsequent notification messages sent for the upgrade package to which the second permission information is applicable.

In a possible implementation of the second aspect, that the terminal device sends a second notification message includes:

The terminal device displays the second notification message on the display. The second notification message includes at least one of the following content: The second permission information is applicable to an upgrade package that belongs to a same application as the second upgrade package; the second permission information is applicable to an upgrade package that belongs to an application of a same type as an application to which the second upgrade package belongs; the second permission information is applicable to an upgrade package that has a same function as the second upgrade package; or the second permission information is applicable to an upgrade package that is the same as a component corresponding to the second upgrade package.

In a possible implementation of the second aspect, a type of the first upgrade package is the same as a type of the second upgrade package. In this way, it may be inferred, based on data packets of a same type, whether the first operation in the upgrade process that is based on the second data packet is allowed by the user, thereby improving inference accuracy.

In a possible implementation of the second aspect, to improve flexibility of the solution, a type of the second upgrade package is determined based on at least one of the following content: an application to which the second upgrade package belongs; a type of an application to which the second upgrade package belongs; function information corresponding to the second upgrade package; or component information corresponding to the second upgrade package.

According to a third aspect, this application provides a method for obtaining permission information of a user in an upgrade process. In the method, a terminal device sends a fourth notification message. The fourth notification message notifies the user to input first permission information. The first permission information indicates whether to perform a first operation in an upgrade process that is based on an upgrade package of a first type. The terminal device receives the first permission information. In a possible implementation of the third aspect, the terminal device sends a fifth notification message. The fifth notification message notifies the user to input period information corresponding to the first permission information. The terminal device receives the period information of the first permission information. In this way, the user inputs the period information of the first permission information to indicate whether a notification needs to be sent to the user within a time period, thereby reducing a quantity of notification messages sent to the user within a validity period of the first permission information.

In a possible implementation of the third aspect, the terminal device sends a sixth notification message. The sixth notification message notifies the user to input a type of an upgrade package to which the first permission information is applicable. The terminal device receives information indicating the type of the upgrade package to which the first permission information is applicable. In this way, the user limits the first permission information through inputting the type of the upgrade package to which the first permission information is applicable, to reduce a quantity of subsequent notification messages sent for the upgrade package to which the first permission information is applicable.

In a possible implementation of the third aspect, before that a terminal device sends a fourth notification message, the method further includes: The terminal device obtains information about a first electronic control unit in the terminal device. The information of the first electronic control unit includes at least one of software version information or hardware information of the first electronic control unit. The upgrade package of the first type is an upgrade package corresponding to the first electronic control unit. In this way, information on the terminal device may be collected in advance, to provide a basis for determining whether a notification message is sent in a subsequent upgrade process.

Corresponding to any communication method in the first aspect to the third aspect, this application further provides a communication apparatus. The communication apparatus may be any sending-end device or receiving-end device that performs data transmission in a wireless manner. For example, the communication apparatus may be a communication chip, a terminal device, or a network device (for example, a server). In a communication process, the sending-end device and the receiving-end device are relative. In some communication processes, the communication apparatus may be used as the foregoing network device or a communication chip that may be used in the network device. In some communication processes, the communication apparatus may be used as the foregoing terminal device or a communication chip that may be used in the terminal device.

According to a fourth aspect, a communication apparatus is provided. The communication apparatus includes a communication unit and a processing unit, to perform any implementation of any communication method according to the first aspect to the third aspect. The communication unit is configured to perform functions related to sending and receiving. Optionally, the communication unit includes a receiving unit and a sending unit. In a design, the communication apparatus is a communication chip, and the communication unit may be an input/output circuit or an input/output port of the communication chip.

In another design, the communication unit may be a transmitter and a receiver. Alternatively, the communication unit may be a transmitting machine and a receiving machine.

Optionally, the communication apparatus further includes modules that may be configured to perform any implementation of any communication method according to the first aspect to the third aspect.

According to a fifth aspect, a communication apparatus is provided. The communication apparatus is the foregoing terminal device or network device. The communication device includes a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any implementation of any communication method according to the first aspect to the third aspect.

Optionally, there are one or more processors, and there are one or more memories.

Optionally, the memory may be integrated with the processor, or the memory is disposed separately from the processor.

Optionally, the transceiver may include a transmitting machine (transmitter) and a receiving machine (receiver).

According to a sixth aspect, a communication apparatus is provided. The communication apparatus includes a processor. The processor is coupled to a memory, and may be configured to perform the method according to any one of the first aspect to the third aspect and any possible implementation of the first aspect to the third aspect. Optionally, the communication apparatus further includes a memory. Optionally, the communication apparatus further includes a communication interface. The processor is coupled to the communication interface.

In an implementation, the communication apparatus is a terminal device. When the communication apparatus is a terminal device, the communication interface may be a transceiver or an input/output interface. Optionally, the transceiver may be a transceiver circuit. Optionally, the input/output interface may be an input/output circuit.

In another implementation, the communication apparatus is a network device. When the communication apparatus is a network device, the communication interface may be a transceiver or an input/output interface. Optionally, the transceiver may be a transceiver circuit. Optionally, the input/output interface may be an input/output circuit.

In another implementation, the communication apparatus is a chip or a chip system. When the communication apparatus is a chip or a chip system, the communication interface may be an input/output interface, an interface circuit, an output circuit, an input circuit, a pin, a related circuit, or the like on the chip or the chip system. The processor may alternatively be implemented as a processing circuit or a logic circuit.

According to a seventh aspect, a system is provided. The system includes the foregoing terminal device and the foregoing network device.

According to a nineteenth aspect, a computer program product is provided. The computer program product includes a computer program (which may also be referred to as code or instructions). When the computer program is run, a computer is enabled to perform the method according to any possible implementation of the first aspect, or the computer is enabled to perform the method according to any implementation of the first aspect to the third aspect.

According to an eighth aspect, a computer-readable storage medium is provided. The computer-readable storage medium stores a computer program (which may also be referred to as code or instructions). When the computer program is run on a computer, the computer is enabled to perform the method according to any possible implementation of the first aspect, or perform the method according to any implementation of the first aspect to the third aspect.

According to a ninth aspect, a chip system is provided. The chip system may include a processor. The processor is coupled to a memory, and may be configured to perform the method according to any one of the first aspect to the third aspect and any possible implementation of the first aspect to the third aspect. Optionally, the chip system further includes a memory. The memory is configured to store a computer program (which may also be referred to as code or instructions). The processor is configured to invoke the computer program from the memory and run the computer program, so that a device in which the chip system is installed is enabled to perform the method according to any one of the first aspect to the third aspect and any possible implementation of the first aspect to the third aspect.

According to a tenth aspect, a processing apparatus is provided. The processing apparatus includes an input circuit, an output circuit, and a processing circuit. The processing circuit is configured to receive a signal through the input circuit, and transmit a signal through the output circuit, so that the method according to any one of the first aspect to the third aspect and any possible implementation of the first aspect to the third aspect is implemented.

In a specific implementation process, the processing apparatus may be a chip. The input circuit may be an input pin. The output circuit may be an output pin. The processing circuit may be a transistor, a gate circuit, a flip-flop, any logic circuit, or the like. An input signal received by the input circuit may be received and input by, for example, but not limited to, a receiver. A signal output by the output circuit may be output to, for example, but not limited to, a transmitter and transmitted by the transmitter. In addition, the input circuit and output circuit may be a same circuit. The circuit is used as the input circuit and the output circuit at different moments. Specific implementations of the processor and the various circuits are not limited in embodiments of this application.

### BRIEF DESCRIPTION OF DRAWINGS

FIG. 1a is a schematic diagram of a scenario to which an embodiment of this application is applicable;
FIG. 1b is a schematic diagram of a scenario to which an embodiment of this application is applicable;
FIG. 2A and FIG. 2B are a schematic flowchart of a possible method for obtaining permission information;
FIG. 3a-1 and FIG. 3a-2 are a schematic flowchart of a method for obtaining permission information in an upgrade process according to an embodiment of this application;
FIG. 3b-1 and FIG. 3b-2 are a schematic flowchart of a method for obtaining permission information in an upgrade process according to an embodiment of this application;

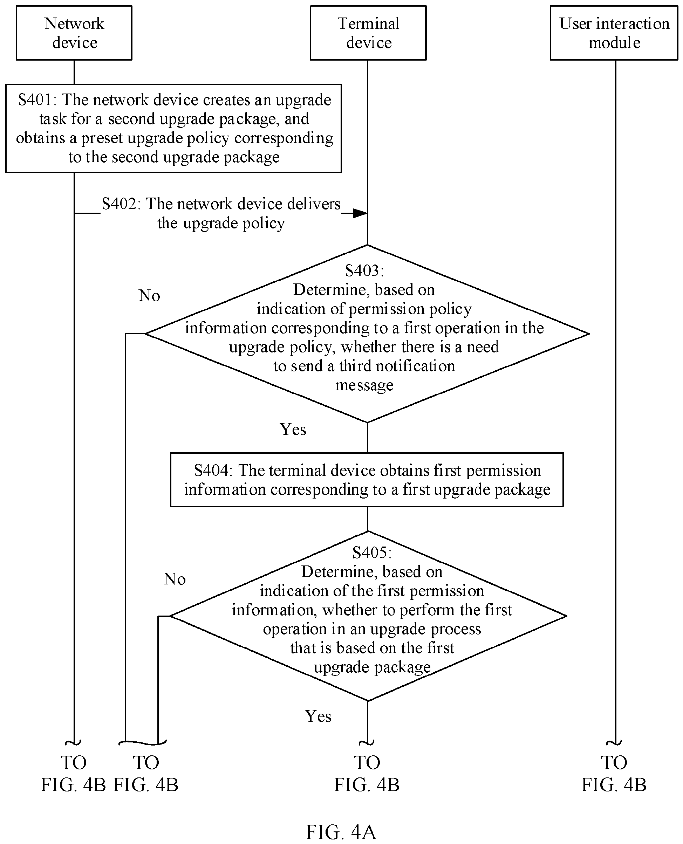

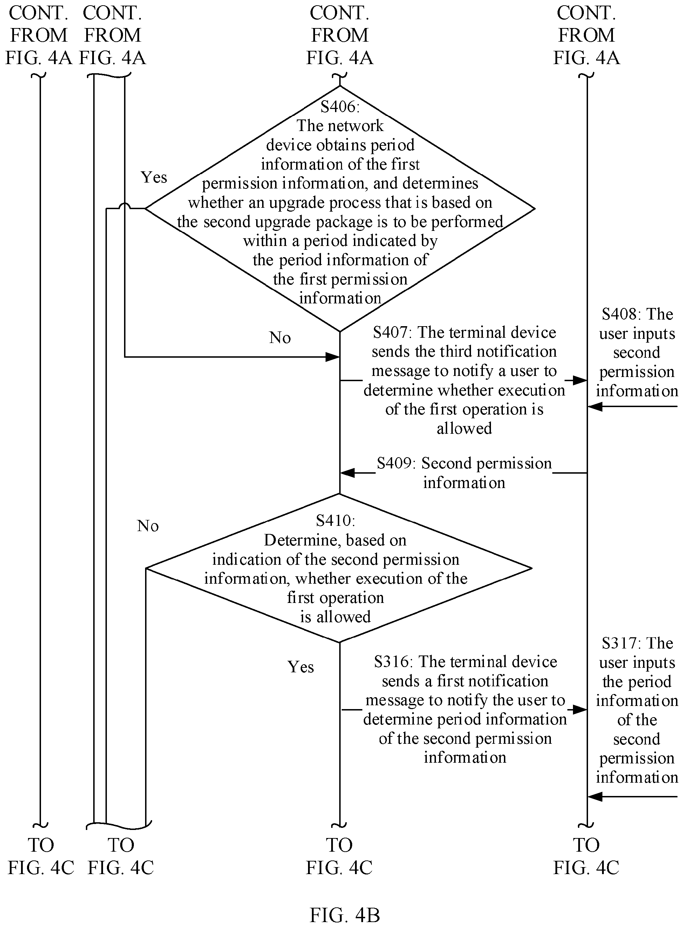

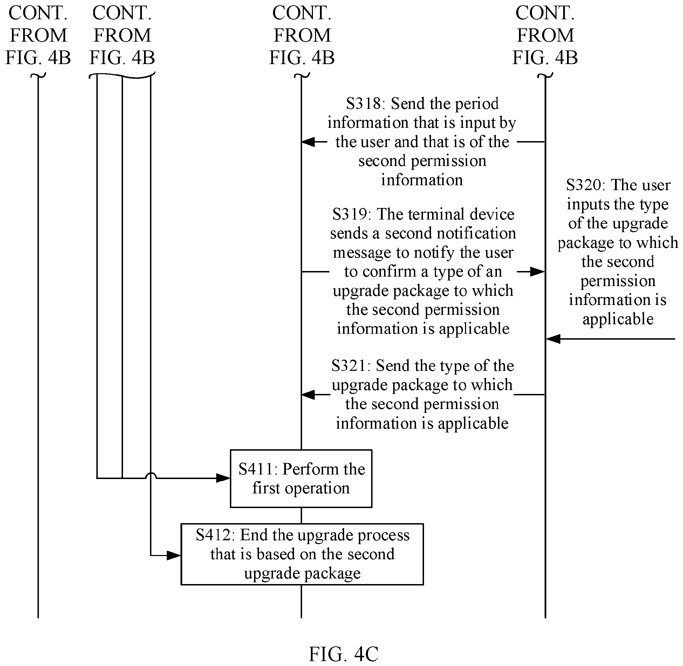

FIG. 4A, FIG. 4B and FIG. 4C are a schematic flowchart of another method for obtaining permission information in an upgrade process according to an embodiment of this application;

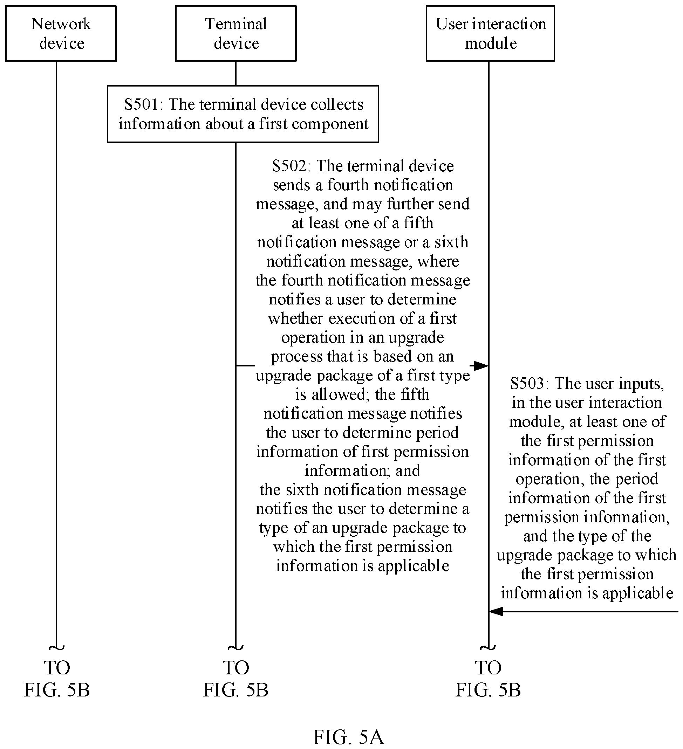

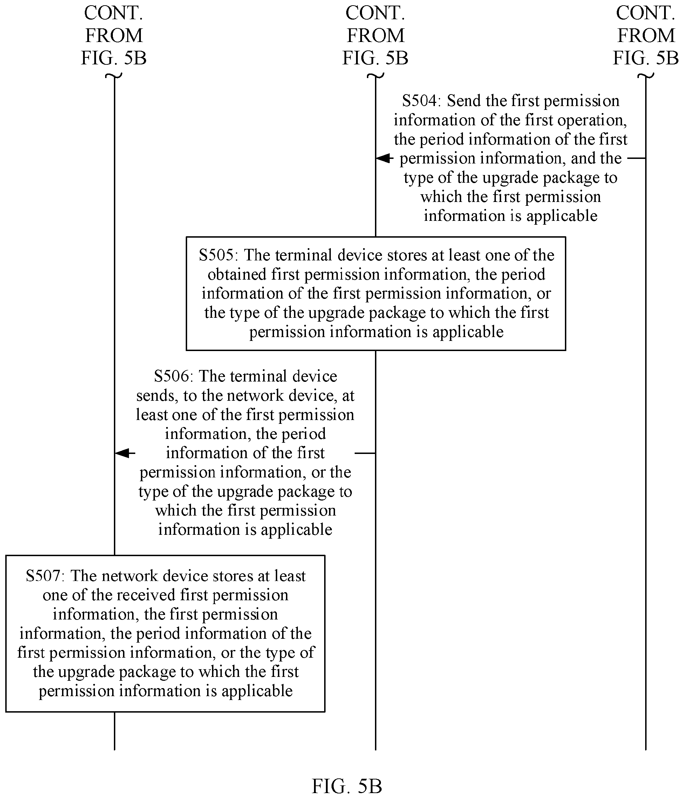

FIG. 5A and FIG. 5B are a schematic flowchart of a method for obtaining first permission information according to an embodiment of this application;

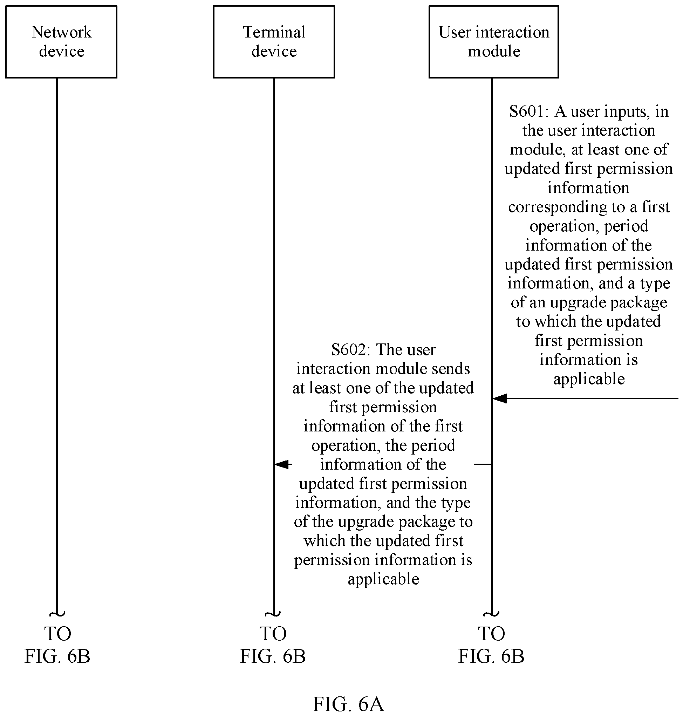

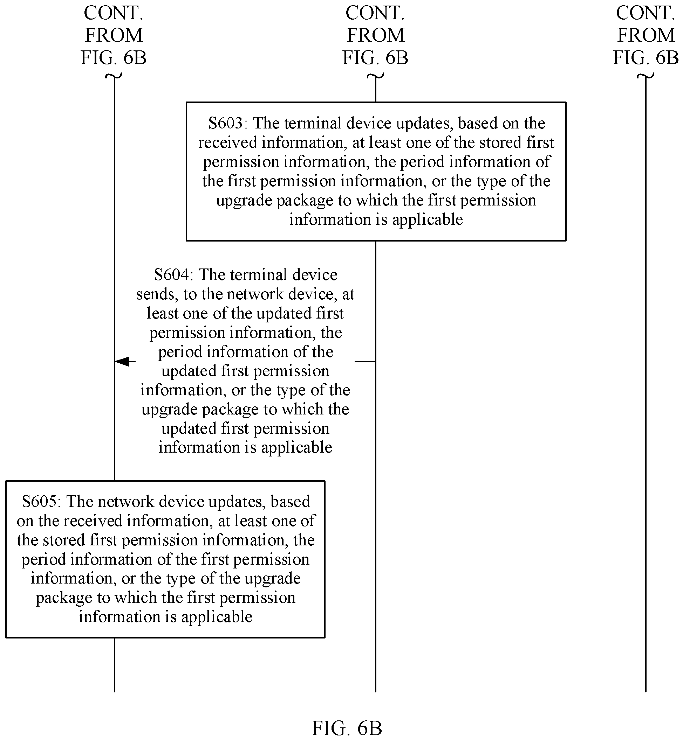

FIG. 6A and FIG. 6B are a schematic flowchart of a method for updating first permission information according to an embodiment of this application;

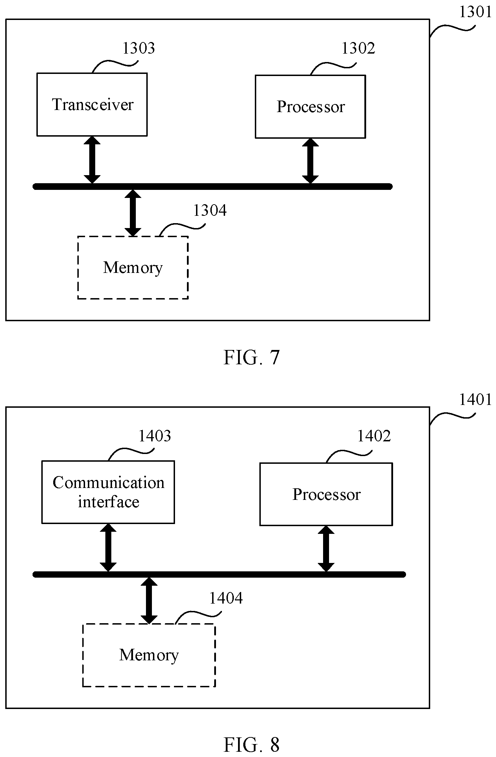

FIG. 7 is a schematic diagram of a structure of a communication apparatus according to an embodiment of this application;
FIG. 8 is a schematic diagram of a structure of a communication apparatus according to an embodiment of this application; and

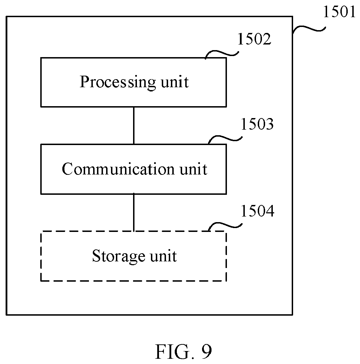

FIG. 9 is a schematic diagram of a structure of a communication apparatus according to an embodiment of this application.

### DESCRIPTION OF EMBODIMENTS

The following further describes embodiments of this application with reference to the accompanying drawings.

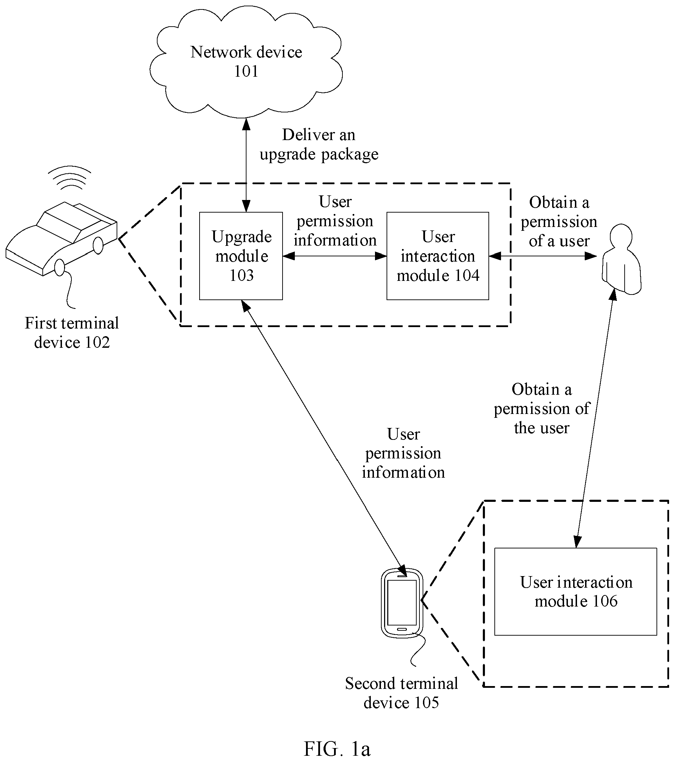

FIG. 1a shows an example of a schematic diagram of a scenario to which an embodiment of this application is applicable. As shown in FIG. 1a, the scenario includes a network device 101 and a first terminal device 102 that has an upgrade requirement. In FIG. 1a, only an example in which the first terminal device 102 is a vehicle is used for illustration. In a possible implementation, the first terminal device 102 in this embodiment of this application may include an upgrade module 103, configured to perform an upgrade-related operation. For example, the network device 101 may be configured to deliver one or more upgrade packages to the upgrade module 103 of the vehicle. The upgrade module 103 may install the upgrade package to upgrade software or firmware in the vehicle. In an upgrade process that is based on the upgrade package, there are some first operations for which permission information of a user needs to be obtained, for example, at least one of download of the upgrade package or installation of the upgrade package. In this embodiment of this application, for the first operations for which a notification message needs to be sent to obtain the permission information of the user, whether the notification message needs to be sent may be determined with reference to historical permission information of the user. If the historical permission information of the user is valid for an upgrade of the upgrade package, the notification message may no longer be sent. If the historical permission information of the user is invalid for the upgrade of the upgrade package, the notification message is sent again to obtain the permission information of the user. In this way, a quantity of sent notification messages can be reduced.

When the notification message needs to be sent to obtain the permission information of the user, the user may input the permission information of the user through a user interaction module. In a possible implementation, the user interaction module may be a function module or component disposed in the first terminal device 102 (for example, a user interaction module 104 in FIG. 1a). In this case, the user may input the permission information of the user through the user interaction module 104 of the first terminal device 102 (for example, a display or an audio apparatus of the first terminal device). The user may input the permission information of the user by performing an operation on the display, or may input in a voice manner. Then, the user interaction module 104 may transmit the permission information of the user to the upgrade module 103, so that the upgrade process may be run by the upgrade module 103 based on the permission information of the user.

In another possible implementation, the user interaction module may be a function module or component disposed in another terminal device, for example, a second terminal device 105 (for example, a user interaction module 106 in FIG. 1a). In this case, the user may input the permission information of the user through the user interaction module 106 of the second terminal device 105 (for example, the display screen or the audio apparatus of the first terminal device). The permission information may be input by performing an operation on the display screen of the second terminal device 105, or may be input in a voice manner. Then, the permission information of the user is transmitted by the second terminal device 105 to the first terminal device 102, and is then transmitted to the upgrade module 103, so that the upgrade process may be run by the upgrade module 103 based on the permission information of the user. It should be noted that, the permission information of the user may be transmitted by the second terminal device 105 to the upgrade module 103 of the first terminal device 102. Alternatively, the permission information of the user may be transmitted by the second terminal device 105 to the user interaction module 104 of the first terminal device 102, and then the permission information of the user is transmitted by the user interaction module 104 to the upgrade module 103 of the first terminal device 102.

To describe the solution in this embodiment of this application more clearly in subsequent content, an example in which the user interaction module is the user interaction module 104 in the first terminal device 102 is used for description.

The upgrade process in this embodiment of this application may be applicable to a plurality of technologies. The upgrade process may be applicable to an OTA technology for downloading data based on a wireless network, and may also be applicable to a technology for downloading data based on a wired network. This is not limited in this embodiment of this application. To describe the solution implemented in this application more clearly, the OTA technology is used as an example for description subsequently.

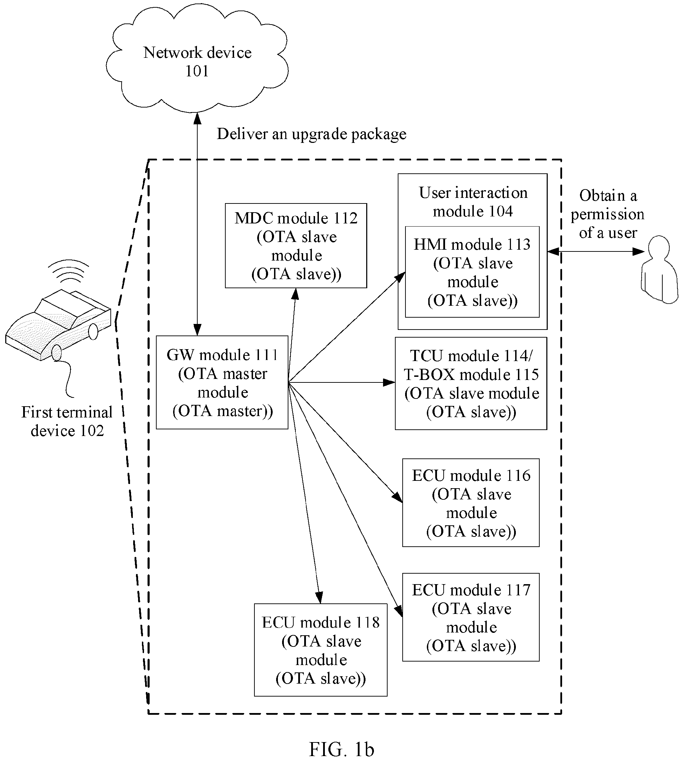

FIG. 1b shows an example of a schematic diagram of another scenario to which an embodiment of this application is applicable. As shown in FIG. 1b, in a possible implementation, an upgrade package of software or firmware in the vehicle may be downloaded based on the OTA technology. One OTA master module (the OTA master module may also be referred to as an OTA master module) and one or more OTA slave modules (the OTA slave modules may also be referred to as OTA slave modules) may be deployed on the vehicle. The OTA master module may be configured to coordinate an OTA slave module of each component (the OTA slave module may also be referred to as an upgrade module of each component) to perform an upgrade, to complete the upgrade of the vehicle.

In a possible implementation, the upgrade module 103 in FIG. 1a may include the OTA master module in FIG. 1b. In another possible implementation, the upgrade module 103 in FIG. 1a may include the OTA master module and at least one OTA slave module in FIG. 1b.

In a possible implementation, a vehicle upgrade package (including an upgrade package of one or more components) is signed by the network device 101, and sent to the OTA master module. For example, the upgrade package may be delivered through a transport layer security (transport layer security, TLS) channel. The upgrade package is verified by the OTA master module, disassembled and then distributed to the OTA slave module of the corresponding component. The OTA master module controls the OTA slave module on each component to install and activate the upgrade package based on a specific dependency relationship and a specific sequence.

The OTA master module may be deployed on one or more components in the vehicle. For example, the OTA master module may be deployed on a gateway (gateway, GW) module 111, a telematics control unit (Telematics Control Unit, TCU) module 114, or a telematics box (telematics BOX, T-BOX) module 115 of the vehicle.

The OTA slave module may be deployed on one or more components in the vehicle. For example, the OTA slave module may be deployed on at least one of a mobile data center (mobile data center, MDC) module 112, a human-machine interaction (human-machine interaction, HMI) module 113, a TCU module 114 or a T-BOX module 115, an electronic control unit (electronic control unit, ECU) module, a cockpit domain controller (cockpit domain controller, CDC) module, or a vehicle domain controller (vehicle domain controller, VDC) module.

In a possible implementation, the user interaction module 104 in FIG. 1a may include the HMI module 113 in FIG. 1b.

It should be noted that FIG. 1a shows only some components in the vehicle, but not all components. The following provides descriptions for the components mentioned in the foregoing content.

The GW 111 module is a core component in an electronic and electrical architecture of the vehicle. As a data interaction hub of a vehicle network, the GW 111 module may route network data of a controller area network (controller area network, CAN), a local interconnect network (local interconnect network, LIN), media oriented system transport (media oriented system transport, MOST), and FlexRay in different networks.

The MDC module 112 may be an intelligent vehicle-mounted computing platform of a vehicle.

The HMI module 113 may be an information entertainment system of a vehicle.

The TCU module 114 may be configured to communicate with an exterior of a vehicle, a background system and a smartphone, an application (application, APP) network device, and the like.

The T-BOX module 115 may be configured to communicate with an outside of a vehicle, a background system, a smartphone, an APP network device, and the like.

The ECU module is a vehicle-specific microcomputer controller. One or more ECU modules may be deployed. FIG. 1a shows a plurality of ECU modules, for example, an ECU 116 module, an ECU 117 module, and an ECU 118 module in FIG. 1a.

The CDC module is configured to control content related to a cockpit domain.

The VDC module is configured to control content related to a vehicle domain.

It should be noted that, in FIG. 1a, the example in which the first terminal device 102 is the vehicle is used for illustration. In an actual application, the method for obtaining permission information of a user provided in this embodiment of this application may also be applied to another terminal device. For example, the method may be applied to a network upgrade scenario of a device such as a smart television, a smartphone, a tablet computer, or a set-top box.

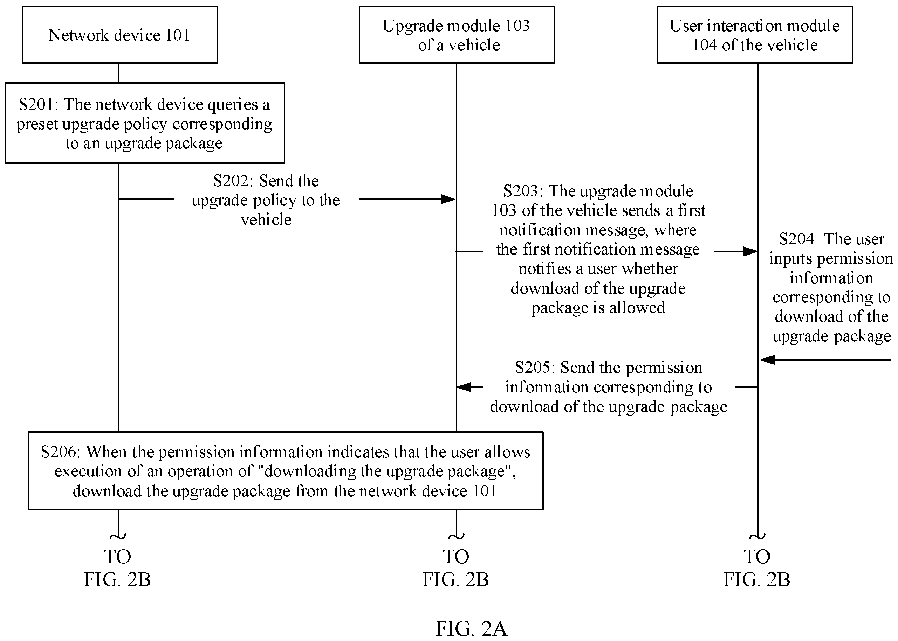

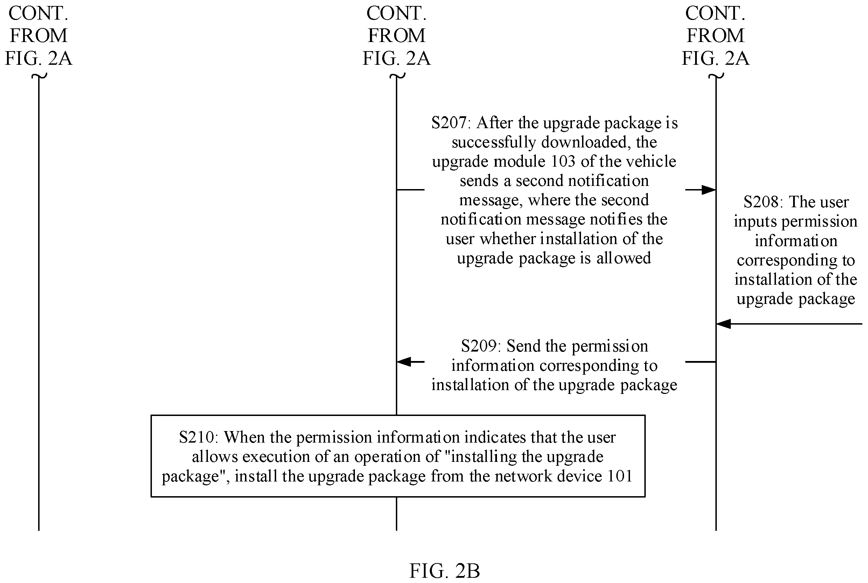

Based on the content shown in FIG. 1a, FIG. 2A and FIG. 2B show an example of a schematic flowchart of a possible method for obtaining permission information of a user. In FIG. 2A and FIG. 2B, an example in which the user interaction module is the user interaction module 104 in FIG. 1a is used for illustration.

As shown in FIG. 2A and FIG. 2B, the method includes:

S201: The network device 101 queries a preset upgrade policy corresponding to an upgrade package.

If an upgrade type of the upgrade package is a regular upgrade, the upgrade policy includes the following information:

A notification message needs to be sent to notify the user to determine download of the upgrade package; and
a notification message needs to be sent to notify the user to determine installation of the upgrade package.

S202: The network device 101 sends the upgrade policy to the upgrade module 103 of the vehicle.

Correspondingly, the upgrade module 103 of the vehicle receives the upgrade policy delivered by the network device 101.

S203: The upgrade module 103 of the vehicle sends a first notification message, where the first notification message notifies the user whether download of the upgrade package is allowed.

The upgrade module 103 of the vehicle may send the first notification message to the user interaction module 104, to display the first notification message on the display of the vehicle.

S204: The user inputs permission information corresponding to download of the upgrade package.

The first notification message may be "Do you permit download of the upgrade package?"

The user may select "Yes" or "No".

When the user selects "Yes", the permission information corresponding to download of the upgrade package indicates that the user allows execution of an operation of "downloading the upgrade package"; or
when the user selects "No", the permission information corresponding to the download of the upgrade package indicates that the user does not allow execution of an operation of "downloading the upgrade package".

S205: The user interaction module 104 sends the received permission information corresponding to download of the upgrade package to the upgrade module 103 of the vehicle.

S206: When the permission information indicates that the user allows execution of the operation of "downloading the upgrade package", the upgrade package is downloaded from the network device 101.

When the permission information indicates that the user does not allow execution of the operation of "downloading the upgrade package", the upgrade module 103 ends the upgrade process that is based on the upgrade package.

S207: After the upgrade package is successfully downloaded, the upgrade module 103 of the vehicle sends a second notification message, where the second notification message notifies the user whether installation of the upgrade package is allowed.

The upgrade module 103 of the vehicle may send the second notification message to the user interaction module 104, to display the second notification message on the display of the vehicle.

S208: The user inputs permission information corresponding to installation of the upgrade package.

The second notification message may be "Do you permit installation of the upgrade package?"

The user may select "Yes" or "No".

When the user selects "Yes", the permission information corresponding to installation of the upgrade package indicates that the user allows execution of an operation of "installing the upgrade package"; or
when the user selects "No", the permission information corresponding to installation of the upgrade package indicates that the user does not allow execution of an operation of "installing the upgrade package".

S209: The user interaction module 104 sends the received permission information corresponding to installation of the upgrade package to the upgrade module 103 of the vehicle.

S210: When the permission information indicates that the user allows execution of the operation of "installing the upgrade package", the upgrade package is installed from the network device 101.

When the permission information indicates that the user does not allow execution of the operation of "installing the upgrade package", the upgrade module 103 ends the upgrade process that is based on the upgrade package.

It can be learned from the foregoing content that, when the upgrade type of the upgrade package is a regular upgrade, a notification message needs to be sent to the user for both download and installation of the upgrade package in the upgrade process that is based on the upgrade package, to determine whether the content is permitted by the user. The notification message is sent too frequently, thereby bringing great inconvenience to the user. Based on this, this embodiment of this application provides a solution, and whether the notification message needs to be sent may be determined with reference to historical permission information of the user, so that a quantity of notification messages to be sent can be reduced. Detailed description is provided with reference to the accompanying drawings in subsequent content.

The following first provides descriptions for related components in this embodiment of this application.

### (1) Terminal device

The terminal device (for example, the first terminal device or the second terminal device) in this embodiment of this application may be a vehicle or a non-motor vehicle, a portable device, a wearable device, a mobile phone (or referred to as a "cellular" phone), or the like that has a communication function, or may be a component, a chip, or the like in these devices. The first terminal device in this embodiment of this application may be a terminal device used in the internet of vehicles. The terminal device in this application may also be referred to as an internet of vehicles terminal device, an internet of vehicles terminal, an internet of vehicles communications apparatus, a vehicle-mounted terminal device, or the like. The second terminal device in this embodiment of this application includes but is not limited to a device that can interact with the user, such as a smartphone, a tablet computer, a smart band, a smart watch, a smart speaker, or an internet of vehicles terminal device.

The vehicle (for example, the first terminal device 102 in FIG. 1a) is a typical terminal device in the internet of vehicles. In the following embodiments of this application, the vehicle is used as an example for description. Any vehicle in embodiments of this application may be an intelligent vehicle or a non-intelligent vehicle. This is not limited in embodiments of this application. A person skilled in the art should understand that, in this application, an embodiment in which the vehicle is used as an example may be further applied to a terminal device of another type. The terminal device may specifically perform a service procedure related to the internet of vehicles through a function unit or apparatus in the terminal device. For example, when the terminal device is the vehicle, one or more of the following apparatuses in the vehicle may be configured to perform a method procedure related to the terminal device in embodiments of this application, such as a telematics box (telematics box, T-Box), a domain controller (domain controller, DC), a multi-domain controller (multi-domain controller, MDC), an on board unit (on board unit, OBU), or an internet of vehicles chip.

In embodiments of this application, the vehicle may communicate with another object based on a wireless communication technology between the vehicle and the outside (for example, communication between the vehicle and another apparatus (vehicle to everything, V2X)). For example, communication between the vehicle and a cloud network device may be implemented based on the V2X. Communication between the vehicle and the another object may be performed based on a wireless fidelity (for example, wireless fidelity (Wi-Fi)) or a 5th generation (5th generation, 5G) mobile communication technology. For example, communication between the vehicle and another apparatus (such as a road side unit 206 or a network device 204) may be implemented based on the 5G.

### (2) Network device

As shown in FIG. 1a, the application scenario may include a network device. The network device may be an internet of vehicles platform or a server that manages a terminal device and/or a road side unit and provides a service. The network device may be a physical device such as a host or a server, or may be a virtual device such as a virtual machine or a container. A specific deployment form of the network device is not limited in this application. For example, the network device may be deployed on a cloud, or may be an independent computer device or chip.

When a V2X message needs to be sent to a terminal device, for example, the network device 101 may be configured to deliver an upgrade task, and the network device may directly send the V2X message to the terminal device.

Certainly, the network device may alternatively send the V2X message to a road side unit (road side unit, RSU), and the RSU broadcasts the V2X message to a terminal device in a coverage area of the RSU. A specific deployment form of the RSU is not specifically limited in this application. The RSU may be a terminal device, a mobile or non-mobile terminal device, a network device, a chip, or the like.

For the RSU, the RSU in embodiments of this application may be configured to send a vehicle to everything (vehicle to everything, V2X) message to the terminal device in a communication manner such as direct communication (for example, PC5) or dedicated short range communications (dedicated short range communications, DSRC). The V2X message may carry dynamic information or other information that needs to be notified to the terminal device. The communication manner between the road side unit and the terminal device may also be referred to as vehicle to infrastructure (vehicle to infrastructure, V2I) communication. The road side unit may be further configured to communicate with the network device. For example, the road side unit may report dynamic information occurring in a management area to the network device of the internet of vehicles. For example, the dynamic information may be reported through a roadside information (roadside information, RSI) message.

The following provides descriptions for, with reference to the accompanying drawings, a method for obtaining permission information of a user in an upgrade process provided in this embodiment of this application. An example in which the method for obtaining permission information provided in this embodiment of this application is performed by a network device, a terminal device, and a user interaction module is used for description.

A related solution on a network device side may be implemented by the network device, or by a function module, a component, a chip, or the like in the network device. For example, the network device may be the network device 101 in FIG. 1a and FIG. 1b in the foregoing content, or may be a function module, a component, or a chip in the network device 101.

A related solution on a terminal device side may be implemented by the terminal device, or by a function module, a component, or a chip in the terminal device. For example, the terminal device may be the first terminal device 102 in FIG. 1a and FIG. 1b in the foregoing content, or the OTA master module in the first terminal device 102.

The user interaction module may be the terminal device, or a function module, a component, or a chip in the terminal device. For example, the user interaction module may be the first terminal device 102 in FIG. 1a and FIG. 1b in the foregoing content, or the user interaction module 104 in the first terminal device 102. Alternatively, the user interaction module may be the second terminal device 105 in FIG. 1a and FIG. 1b, or the user interaction module 106 in the second terminal device 105.

In the following content, an example in which the network device is the network device 101, the terminal device is the first terminal device 102, and the user interaction module is the user interaction module 104 in the first terminal device 102 is used for description.

Based on the foregoing content, FIG. 3a-1 and FIG. 3a-2 and FIG. 3b-1 and FIG. 3b-2 show examples of schematic flowcharts of a method for obtaining permission information in an upgrade process according to an embodiment of this application.

In this embodiment of this application, the network device may obtain N upgrade packages, where N is a positive integer. Each upgrade package corresponds to one preset upgrade policy, and one preset upgrade policy may correspond to one or more upgrade packages. In other words, a plurality of upgrade packages may correspond to a same upgrade policy. The following content provides descriptions for one upgrade package. For clearer description, in this embodiment of this application, an example in which a second upgrade package needs to be downloaded for upgrade is used for description. The second upgrade package is one of the N upgrade packages. As shown in FIG. 3a-1 and FIG. 3a-2, the method includes the following steps.

S301: The network device creates an upgrade task for the second upgrade package, and obtains a preset upgrade policy corresponding to the second upgrade package.

In a possible implementation, the network device may collect configuration information of the terminal device (for example, the terminal device is a vehicle), such as a software version and a vehicle identifier. The upgrade task may be created based on the configuration information of the terminal device. For example, when a software version of an application of the vehicle is 1.0, and a current latest version of the application is 2.0, an upgrade task corresponding to the application may be created, to upgrade the software version of the application on the vehicle from 1.0 to 2.0 through the upgrade task.

The following first provides descriptions for the preset upgrade policy. The preset upgrade policy includes at least one of information a1 to information a4.

Information a1: The upgrade policy includes permission policy information corresponding to at least one operation. Permission policy information corresponding to an operation in the at least one operation indicates whether to notify the user to perform the operation in an upgrade process that is based on the second upgrade package.

The at least one operation includes at least one of download of an upgrade package or installation of an upgrade package. In actual application, content of the operation may be further added based on an actual situation. For example, the at least one operation may further include creation of an upgrade task for an upgrade package.

To describe this embodiment of this application more clearly, a first operation in the at least one operation is used as an example for description. To be specific, the first operation is at least one of download of an upgrade package or installation of an upgrade package.

In the upgrade policy, first permission policy information corresponding to the first operation is referred to as first permission policy information. The first permission policy information indicates whether to notify the user to perform the first operation in the upgrade process that is based on the second upgrade package. In another possible implementation, the first permission policy information indicates whether to obtain a permission of the user for the first operation by sending a notification message. In another possible implementation, the first permission policy information indicates whether a notification message needs to be sent. The notification message notifies the user to determine whether to allow execution of the first operation.

For example, when the first operation is download of an upgrade package, the information a1 may be: There is a need to notify the user to perform the first operation (which may also be described as: There is a need to notify the user, by sending a notification message, to determine whether to allow download of the upgrade package); or there is no need to notify the user to perform the first operation (which may also be described as: There is no need to notify the user to determine whether to download the upgrade package; or described as: There is no need to notify the user, by sending a notification message, to determine whether to allow download of the upgrade package).

For another example, when the first operation is installation of an upgrade package, the information a1 may be: There is a need to notify the user, by sending a notification message, to determine whether to allow installation of the upgrade package; or there is no need to notify the user to determine whether to install the upgrade package (which may also be described as: There is no need to notify the user, by sending a notification message, to determine whether to allow installation of the upgrade package).

### Information a2: Upgrade condition

Before performing an upgrade based on the second upgrade package, the terminal device needs to determine that the terminal device meets the upgrade condition.

When the terminal device is a vehicle, the upgrade condition may include at least one of the following content: A charging cable is plugged into the vehicle, a gear is in a P gear, the vehicle is in a parking state, and the like.

In another possible implementation, an upgrade condition corresponding to the at least one first operation may be determined. In this way, before the first operation is performed, it further needs to be ensured that the upgrade condition corresponding to the first operation is met.

In a possible implementation, one first operation may correspond to one upgrade condition, or a plurality of first operations may correspond to one upgrade condition, or all first operations correspond to one upgrade condition.

### Information a3: Upgrade type

The upgrade type may be preset, for example, may be a silent upgrade or a regular upgrade.

In a possible implementation, in preset first permission policy information, a correspondence may be preset between the first permission policy information corresponding to the at least one first operation in the information a1 and the upgrade type.

For example, when the upgrade type is a silent upgrade, there is no need to notify the user of execution of an upgrade task, download of the upgrade package, and installation of the upgrade package in the upgrade process that is based on the upgrade package.

For another example, when the upgrade type is a regular upgrade, there is a need to notify the user of execution of an upgrade task, download of the upgrade package, and installation of the upgrade package in the upgrade process that is based on the upgrade package. In another possible implementation, when the upgrade type is a regular upgrade, there is a need to notify the user of at least one of execution of an upgrade task, download of the upgrade package, and installation of the upgrade package in the upgrade process that is based on the upgrade package.

The upgrade type and a meaning represented by the upgrade type may be set based on an actual situation.

### Information a4: Upgrade sequence

The upgrade sequence is an upgrade sequence of the N upgrade packages when N is an integer greater than 1. The terminal device needs to sequentially perform upgrade processes of the N upgrade packages based on the upgrade sequence.

S302: Determine, based on indication of the first permission policy information in the upgrade policy, whether there is a need to notify the user to perform the first operation in the upgrade process that is based on the second upgrade package.

If there is no need to notify the user, step S303 is performed.

If there is a need to notify the user, step S304 is performed.

It should be noted that, in a possible implementation, the preset upgrade policy in this embodiment of this application may be stored in the network device. When the preset upgrade policy indicates that there is no need to notify the user of all operations for the second upgrade package, an upgrade type of a first upgrade package may be determined as a silent upgrade. In a possible implementation, in this embodiment of this application, when the preset upgrade policy indicates that there is no need to notify the user of the first operation for the second upgrade package, an upgrade type of a first upgrade package may be determined as a silent upgrade.

In another possible implementation, in this embodiment of this application, when the preset upgrade policy indicates that there is a need to notify the user of all operations for the second upgrade package, an upgrade type of a first upgrade package may be determined as a regular upgrade. In a possible implementation, in this embodiment of this application, when the preset upgrade policy indicates that there is a need to notify the user of the first operation for the second upgrade package, an upgrade type of a first upgrade package may be determined as a regular upgrade.

S303: The network device sends the upgrade policy, where the upgrade policy includes the first permission policy information.

S304: The network device obtains first permission information corresponding to the first upgrade package. The first permission information indicates whether to perform the first operation in an upgrade process that is based on the first upgrade package.

In a possible implementation, the first upgrade package may be a historical upgrade package on the terminal device. In this way, the network device may infer a permission status for the current second upgrade package based on a permission habit of the user on the terminal device for the historical upgrade package. For example, because the first operation performed on a historical upgrade package corresponding to the terminal device is permitted by the user, it may be inferred that the first operation performed on the current second upgrade package is also permitted by the user.

In another possible implementation, the first upgrade package may be an upgrade package of a same type as the second upgrade package. Obtaining the first permission information of the first upgrade package may also be described as: obtaining first permission information corresponding to an upgrade package of a first type. A type of the second upgrade package is the first type. The first permission information indicates whether to perform the first operation in an upgrade process based on the upgrade package of the first type.

In this embodiment of this application, a type of an upgrade package may be determined based on at least one of the following content of the upgrade package: an application to which the upgrade package belongs, a type of the application to which the upgrade package belongs, function information corresponding to the upgrade package, or component information corresponding to the upgrade package.

For example, a plurality of upgrade packages corresponding to a same application may be determines as upgrade packages of a same type. For example, a plurality of upgrade packages corresponding to Baidu Maps^{™} may be determined as upgrade packages of a same type.

For another example, applications may be classified based on functions of the applications. For example, it may be determined that a plurality of applications such as Baidu Map^{™} and Amap^{™} that belong to a map type are of a same application type. In this case, a plurality of upgrade packages of a same application type may be determined as upgrade packages of a same type. For example, an upgrade package corresponding to Baidu Map^{™} and an upgrade package corresponding to Amap^{™} are determined as upgrade packages of a same type.

For another example, upgrade packages with similar or same functions may be further determined as upgrade packages of a same type. For example, a plurality of upgrade packages for a vehicle-mounted navigation system may be determined as upgrade packages of a same type.

For another example, a plurality of upgrade packages corresponding to a same component may be determined as upgrade packages of a same type. For example, a plurality of upgrade packages for upgrading a cockpit domain may be determined as upgrade packages of a same type.

The first permission information of the first operation corresponding to the upgrade package of the first type is obtained before the upgrade task of the second upgrade package is created, and may also be referred to as historical permission information.

The first permission information obtained by the network device may be reported by the terminal device in advance. The network device queries and obtains the first permission information from a local memory. Alternatively, a query request may be sent to the terminal device, and the first permission information is obtained by receiving a query response that carries the information from the terminal device.

S305: The network device determines, based on indication of the first permission information, whether to perform the first operation in the upgrade process that is based on the first upgrade package.

If the first operation is not to be performed, S309 is performed.

If the first operation is to be performed, there may be a plurality of implementations. In an implementation, S306 may be performed. In another possible implementation, S307 may be performed. In the figure, an example in which S306 is performed is used for illustration.

S306: The network device obtains period information of the first permission information, and determines whether the upgrade process that is based on the second upgrade package is to be performed within a period indicated by the period information of the first permission information. The period indicated by the period information of the first permission information is a validity period of the first permission information.

If the upgrade process based on the second upgrade package is to be performed within the period indicated by the period information of the first permission information, S307 is performed.

If the upgrade process based on the second upgrade package is not to be performed within the period indicated by the period information of the first permission information, S309 is performed.

In S306, the period information of the first permission information includes any one of the following content:
a period corresponding to the upgrade process that is based on the first upgrade package;
a preset time period; or
permanence.

For example, an upgrade task of the first upgrade package is created before the upgrade task of the second upgrade package, so that the first upgrade package may be referred to as a historical upgrade package. The period information of the first permission information may be obtained in an upgrade process that is based on a historical upgrade package (referred to as the first upgrade package for ease of reference). For example, a notification may be sent to the user in the upgrade process that is based on the first upgrade package, to query the user: In the upgrade process that is based on the first upgrade package, the first permission information of the first operation is valid only for the first upgrade package, is valid within the preset time period, or is permanently valid?

If a feedback "valid only for the first upgrade package" is received from the user, it may be determined that the first permission information is valid only for the upgrade process that is based on the first upgrade package. In other words, the first permission information is invalid for the second upgrade package. In this case, it may be determined that the period information of the first permission information is the term corresponding to the upgrade process that is based on the first upgrade package. In other words, the upgrade process based on the second upgrade package is not to be performed within the period indicated by the period information of the first permission information.

If the user selects "valid within one month", the period information of the first permission information may be determined as the preset time period, and the time period is one month from a moment at which the user inputs "the period information of the first permission information". If time when the upgrade task of the second upgrade package is currently created is to be performed within the preset time period, for example, is a 20^{th} day starting from a moment at which the user inputs "the period information of the user", it may be determined that the upgrade process based on the second upgrade package is to be performed within the period indicated by the period information of the first permission information. Otherwise, it may be determined that the upgrade process based on the second upgrade package is not to be performed within the period indicated by the period information of the first permission information.

If the user selects "permanently valid", it may be determined that the period information of the first permission information is permanent. Further, it may be determined that the upgrade process based on the second upgrade package is to be performed within the period indicated by the period information of the first permission information.

In another possible implementation, the first permission information may not be obtained in the upgrade process that is based on the first upgrade package. Instead, a notification may be sent to query the user whether the first operation is permitted for the upgrade package of the first type (not for a specific upgrade package), and query for the period information of the first permission information. In this case, the obtaining the first permission information of the first upgrade package may be replaced with obtaining first permission information of the upgrade package of the first type. The first permission information indicates whether to perform the first operation in an upgrade process that is based on the upgrade package of the first type. In other words, the first permission information indicates whether the user allows execution of the first operation in the upgrade process that is based on the upgrade package of the first type.

S307: The network device updates, based on the first permission information, the first permission policy information in the preset upgrade policy, to obtain updated first permission policy information. The updated first permission policy information indicates not to notify the user to perform the first operation in the upgrade process that is based on the second upgrade package. In another possible implementation, the updated first permission policy information indicates that there is no need to notify the user to determine whether to perform the first operation. For clearer description, in this embodiment of this application, the updated first permission policy information is referred to as second permission policy information. In another possible implementation, the second permission policy information indicates that there is no need to notify the user to determine whether to perform the first operation.

S308: Send an upgrade policy including the second permission policy information.

In other words, the upgrade policy sent in S308 includes the updated first permission policy information, but does not include the first permission policy information.

S309: The network device sends an upgrade policy including the first permission policy information.

In S309, because the sent first permission policy information indicates to notify the user to perform the first operation in the upgrade process that is based on the second upgrade package, which may also be understood as that a notification message needs to be sent to obtain a permission of the user for the first operation. Therefore, in a possible implementation, the upgrade policy including the first permission policy information may further include at least one of information a5 and information a6.

Information a5: First indication information

The first indication information indicates a terminal device to send a first notification message. The first notification message notifies the user to determine period information of the second permission information.

Information a6: Second indication information

The second indication information indicates the terminal device to send a second notification message. The second notification message notifies the user to determine a type of an upgrade package to which the second permission information is applicable.

In another possible implementation, when the upgrade policy sent by the network device includes the first permission policy information, at least one of the information a5 and the information a6 may be separately delivered to the terminal device, or may be carried in the upgrade policy for delivery.

In this embodiment of this application, before a message (for example, the upgrade policy) is transmitted between the network device and the terminal device (for example, the OTA master module of the terminal device), some configuration may be performed. For example, a certificate and a private key are configured. Based on configured information, a secure channel, for example, a hyper text transfer protocol over secure socket layer (Hyper Text Transfer Protocol over Secure Socket Layer, HTTPs), Transport Layer Security (Transport Layer Security, TLS), or Datagram Transport Layer Security (Datagram Transport Layer Security, DTLS) secure channel, may be established between the network device and the terminal device, to improve security of information transmission.

The following continues to describe with reference to FIG. 3b-1 and FIG. 3b-2. As shown in FIG. 3b-1 and FIG. 3b-2, the method includes the following steps:
S310: The terminal device receives the upgrade policy.

In a possible implementation, when the upgrade policy is received, operations may be performed in sequence. For example, the operations may be performed in sequence according to a sequence of download of an upgrade package or installation of an upgrade package. In another possible implementation, for at least one operation, before the operation is performed, it further needs to be determined that an upgrade condition corresponding to the operation is met. For description of the upgrade condition, refer to the foregoing content. Details are not described herein again.

For the at least one operation, the terminal device may perform the following S311 to S320. For ease of description, the first operation is used as an example for description in subsequent content.

S311: The terminal device determines, based on indication of the permission policy information in the received upgrade policy, whether there is a need to send a third notification message.

S311 may also be replaced as follows: The terminal device determines, based on indication of the permission policy information in the received upgrade policy, whether to notify the user to perform the first operation.

If there is a need to send the third notification message (for example, the upgrade policy sent by the network device in step S309), S312 is performed.

If there is no need to send the third notification message (for example, the upgrade policy sent by the network device in step S308 or S303), the terminal device no longer sends the third notification message, and S322 may be performed.

S312: The terminal device sends the third notification message, to notify the user to determine whether to permit the first operation.

In a possible implementation, the third notification message may be sent to the HMI module by the OTA master module on the terminal device, so that the third notification message is displayed on a display screen of the terminal device, or the third notification message may be played by an audio play apparatus of the terminal device.

In another possible implementation, the terminal device may send the third notification message to the user interaction module, so that the third notification message is displayed on a display of the terminal device, or the third notification message is played by the audio play apparatus of the terminal device.

For example, the third notification message may be "Do you allow execution of the first operation?".

In a possible implementation, before S309 is performed, it may be determined that an upgrade condition corresponding to the first operation is met.

S313: The user inputs second permission information.

The user may input "Yes" or "No".

When the user selects "Yes", the second permission information indicates that the user allows execution of the first operation; or
when the user selects "No", the second permission information indicates that the user does not allow execution of the first operation.

S314: The terminal device receives the second permission information input by the user.

S315: Determined, based on indication of the second permission information, whether execution of the first operation is allowed.

If execution of the first operation is allowed, S316 is performed.

If execution of the first operation is not allowed, S323 is performed.

S316: The terminal device sends a first notification message to notify the user to determine period information of the second permission information.

In a possible implementation, the first notification message may be sent to the HMI module by the OTA master module on the terminal device, so that the first notification message is displayed on the display screen of the terminal device, or the first notification message may be played by the audio play apparatus of the terminal device.

In another possible implementation, the terminal device may send the first notification message to the user interaction module, so that the first notification message is displayed on the display of the terminal device, or the first notification message is played by the audio play apparatus of the terminal device.

The first notification message may be, for example, "Which of the following is the period information of the second permission information:
valid only in the upgrade process that is based on the second upgrade package, valid within one month, and permanently valid?".

S317: The user inputs the period information of the second permission information.

S318: The terminal device receives the period information that is input by the user and that is of the second permission information.

In a possible implementation, the user interaction module is a module on the terminal device, so that the user may input "the period information of the second permission information" on a screen of the terminal device.

In another possible implementation, the user interaction module is a module on another terminal device, so that the user may input "the period information of the second permission information" on a screen of the user interaction module, or the user may input audio information "the period information of the second permission information" to the user interaction module. Then, the user interaction module of the another terminal device sends the obtained period information of the second permission information to the terminal device.

S319: The terminal device sends a second notification message to notify the user to determine a type of an upgrade package to which the second permission information is applicable.

In a possible implementation, the user interaction module is a module on the terminal device, for example, the HMI module, and the second notification message may be sent to the HMI module by the OTA master module on the terminal device, so that the second notification message is displayed on the display screen of the terminal device, or the second notification message may be played by the audio play apparatus of the terminal device.

In another possible implementation, the user interaction module is a module on another terminal device. The terminal device may send the second notification message to the user interaction module of the another terminal device, so that the second notification message is displayed on a display of the another terminal device, or the second notification message is played by the audio play apparatus of the terminal device.

The second notification message may be, for example, "Which of the following is the type of the upgrade package to which the second permission information is applicable:
valid only for the second upgrade package, valid only for all upgrade packages of an application to which the second upgrade package belongs, and valid only for upgrade packages of all applications of a same type as the application to which the second upgrade package belongs?".

S320: The user inputs the type of the upgrade package to which the second permission information is applicable.

The user may select any one of the three items in S317. For example, the user selects "valid only for all upgrade packages of an application to which the second upgrade package belongs".

S321: The terminal device receives the type that is input by the user of the upgrade package to which the second permission information is applicable.

In a possible implementation, the user may input "the type of the applicable upgrade package" on the screen of the terminal device.

In another possible implementation, the user may input "the type of the applicable upgrade package" on the screen of the user interaction module, or the user may input audio information "the type of the applicable upgrade package" to the user interaction module. Then, the obtained type of the applicable upgrade package is sent to the terminal device by the user interaction module.

S322: Perform the first operation.

In a possible implementation, before S319, the method may further include: Determined that the upgrade condition corresponding to the first operation is met.

S323: End the upgrade process that is based on the second upgrade package.

In a possible implementation, after all first operations are performed, in other words, after the second upgrade package is upgraded, S320 may be alternatively performed to end the current process.

In a possible implementation, the method may further include S324:

S324: The terminal device stores at least one of the following items: the obtained second permission information, the period information of the second permission information, or the type of the upgrade package to which the second permission information is applicable.

Through S324, the terminal device may store the foregoing information, for use in a subsequent upgrade process that is based on another upgrade package, for example, may be an upgrade process that is based on another upgrade package of a second upgrade package type.

In this embodiment of this application, the upgrade process based on the second upgrade package may include execution of an upgrade task, download of the second upgrade package, and installation of the second upgrade package, and may further include at least one of the following items: The network device creates an upgrade task of the second upgrade package, or the network device delivers an upgrade policy of the second upgrade package.

In another possible implementation, the terminal device may send the foregoing information to the network device through S324, so that the network device stores the information, for use in a subsequent upgrade process that is based on another upgrade package, for example, may be a third upgrade package of the second upgrade package type.

S325: The terminal device sends at least one of the following items to the network device: the second permission information, the period information of the second permission information, or the type of the upgrade package to which the second permission information is applicable.

S326: The network device stores at least one of the following items: the received second permission information, the period information of the second permission information, or the type of the upgrade package to which the second permission information is applicable.

It can be learned from the solutions shown in FIG. 3a-1 and FIG. 3a-2 and FIG. 3b-1 and FIG. 3b-2 that, after the preset upgrade policy is obtained on the network device side, the upgrade policy is not directly delivered, but the historical first permission information corresponding to the first operation is obtained. If the upgrade process based on the second upgrade package is not to be performed within the period information of the first permission information, the terminal device may be required to obtain the second permission information by sending a notification message. If the upgrade process based on the second upgrade package is to be performed within the period information of the first permission information, the historical first permission information may be used as the second permission information. Therefore, the terminal device is no longer required to obtain the second permission information by sending a notification message. Therefore, the first permission policy information in the upgrade policy is updated, and the updated first permission policy information does not require the terminal device to send the third notification message, thereby reducing a quantity of sent notification messages.

Based on the foregoing content, FIG. 4A, FIG. 4B and FIG. 4C show an example of a schematic flowchart of another method for obtaining permission information in an upgrade process according to an embodiment of this application.

In this embodiment of this application, the network device may obtain N upgrade packages, where N is a positive integer. Each upgrade package corresponds to one preset upgrade policy, and one preset upgrade policy may correspond to one or more upgrade packages. In other words, a plurality of upgrade packages may correspond to a same upgrade policy. The following content provides descriptions for one upgrade package. For clearer description, in this embodiment of this application, an example in which a second upgrade package needs to be downloaded for upgrade is used for description. The second upgrade package is one of the N upgrade packages. As shown in FIG. 4A, FIG. 4B and FIG. 4C, the method includes the following steps:

S401: The network device creates an upgrade task for the second upgrade package, and obtains a preset upgrade policy corresponding to the second upgrade package. The upgrade policy includes permission policy information corresponding to at least one operation. The permission policy information corresponding to one operation indicates whether a permission of the user for the operation is obtained by sending a notification message.

The preset upgrade policy includes at least one of the foregoing information a1 to information a4. Details are not described again.

For related content of S401, reference may be made to related content of S301. Details are not described herein again.

S402: The network device delivers the upgrade policy.

Correspondingly, the terminal device receives the upgrade policy.

In a possible implementation, when the upgrade policy is received, operations may be performed in sequence. For example, the operations may be performed in sequence according to a sequence of download of an upgrade package or installation of an upgrade package. In other words, download of an upgrade package must be successfully performed before installation of the upgrade package. In another possible implementation, for at least one first operation, before the first operation is performed, it further needs to determine that an upgrade condition corresponding to the permission to be granted is met. For description of the upgrade condition, refer to the foregoing content. Details are not described herein again.

For one or each of the at least one operation, the terminal device may perform the following S403 to S412. For ease of description, the first operation is used as an example for description in subsequent content.

S403: The terminal device determines, based on indication of the permission policy information corresponding to the first operation in the received upgrade policy, whether there is a need to send a third notification message.

If there is a need to send the third notification message, S404 is performed.

If there is no need to send the third notification message, the terminal device no longer sends the third notification message, and S411 may be performed.

S404: The terminal device obtains first permission information corresponding to the first upgrade package.

S405: The network device determines, based on indication of the first permission information, whether to perform the first operation in the upgrade process that is based on the first upgrade package.

If the first operation is not to be performed, S407 is performed.

If the first operation is to be performed, there may be a plurality of implementations. In one implementation, S406 may be performed. In another possible implementation, S411 may be performed. In the figure, an example in which S406 is performed is used for illustration.

S406: The network device obtains period information of the first permission information, and determines whether the upgrade process based on the second upgrade package is to be performed within a period indicated by the period information of the first permission information. The period indicated by the period information of the first permission information is a validity period of the first permission information.

If the upgrade process based on the second upgrade package is not to be performed within the period indicated by the period information of the first permission information, S407 is performed.

If the upgrade process based on the second upgrade package is to be performed within the period indicated by the period information of the first permission information, S411 is performed.

In S407, for the period information of the first permission information, reference may be made to the foregoing content. Details are not described herein again.

For related content of S406, reference may be made to related content of S306. Details are not described herein again.

S407: The terminal device sends a third notification message, to notify the user to determine whether to allow execution of the first operation.

For content of S407, reference may be made to the content of S312. Details are not described herein again.

S408: The user inputs second permission information.

For content of S408, reference may be made to the content of S313. Details are not described herein again.

S409: The terminal device receives the second permission information input by the user.

For content of S409, reference may be made to the content of S314. Details are not described herein again.

S410: The terminal device determines, based on indication of the received second permission information, whether execution of the first operation is allowed or not.

If execution of the first operation is allowed, S411 is performed. In a possible implementation, S316 to S321 may be further performed before S411, to obtain period information of the second permission information and a type of an upgrade package to which the second permission information is applicable.

If execution of the first operation is not allowed, S412 is performed.

S411: Perform the first operation.

In a possible implementation, before S411, the method may further include: Determined that the upgrade condition corresponding to the first operation is met.

S412: End the upgrade process that is based on the second upgrade package.

In a possible implementation, after all first operations are performed, in other words, after the second upgrade package is upgraded, S412 may be alternatively performed to end the current process.

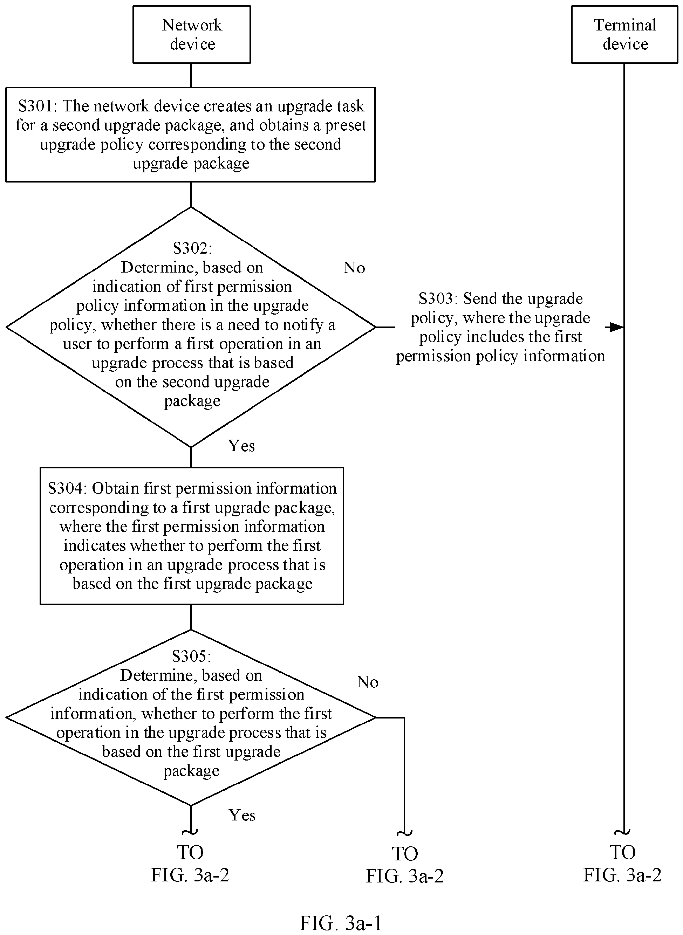

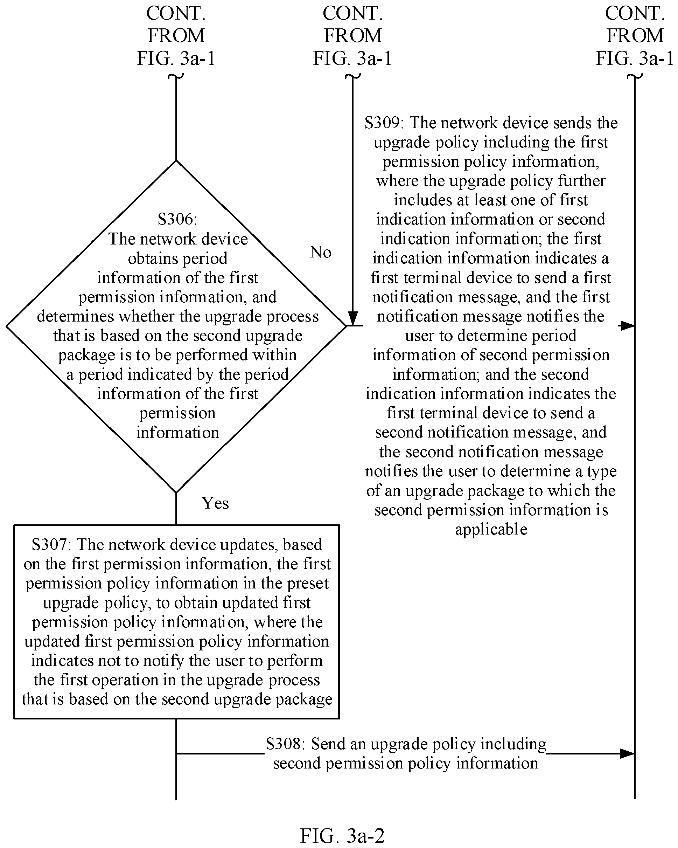

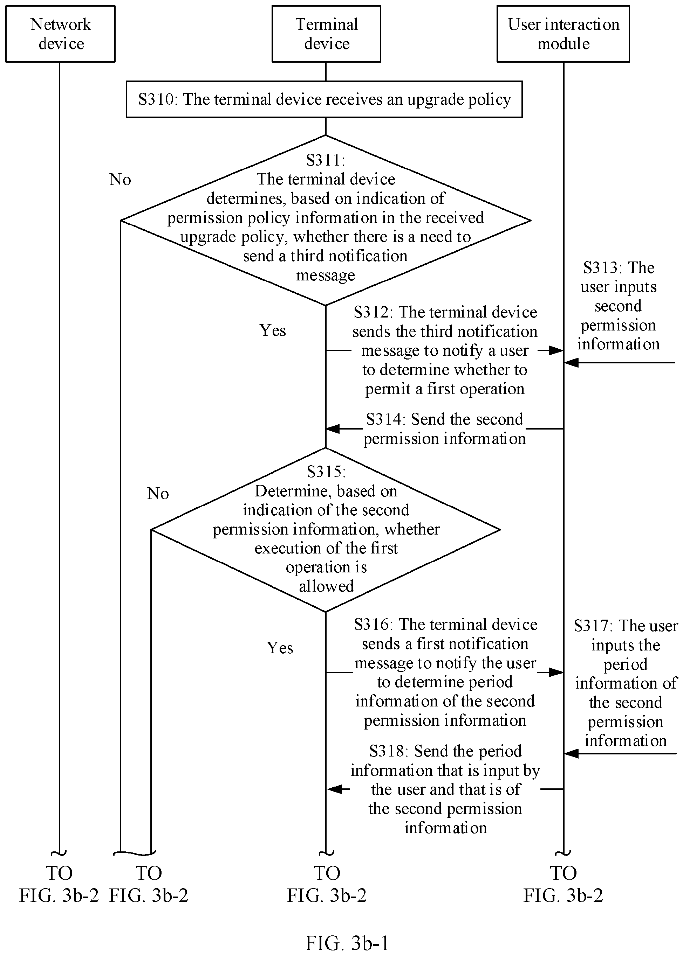

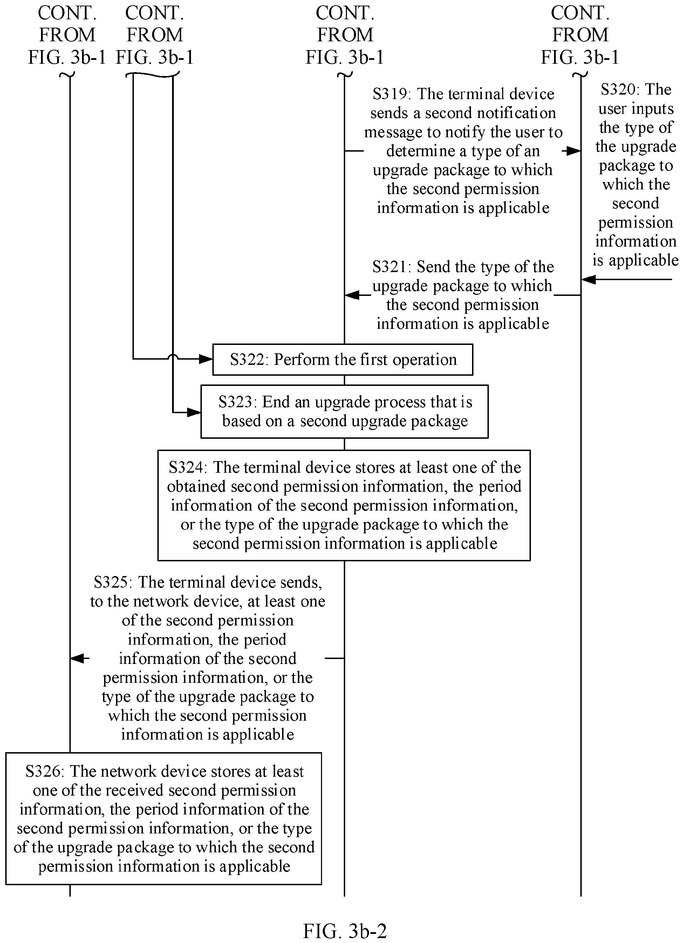

In a possible implementation, in the implementation of FIG. 4A, FIG. 4B and FIG. 4C, after at least one of the second permission information, the period information, or the type of the used upgrade package is obtained, at least one of S321, S322, or S323 in FIG. 3b-2 may be performed.

It can be learned from the solution shown in FIG. 4A, FIG. 4B and FIG. 4C that, after the upgrade policy is obtained on the terminal device side, the first operation for which a notification message needs to be delivered to obtain a permission of the user is not directly performed based on the first permission policy information corresponding to the first operation in the upgrade policy, but the historical first permission information corresponding to the first operation is obtained. If the upgrade process based on the second upgrade package is to be performed within the period information of the first permission information, it may be understood that historical second permission information of the user may be used as the second permission information. Therefore, the second permission information no longer needs to be obtained by sending the third notification message, and the third notification message is not sent, thereby reducing the quantity of sent notification messages.

It should be noted that, in the solution shown in FIG. 4A, FIG. 4B and FIG. 4C, the network device performs S401 and S402. In another possible implementation, in the solution shown in FIG. 4A, FIG. 4B and FIG. 4C, S401 and S402 may be replaced with the foregoing S301 to S309. In other words, in the solution shown in FIG. 4A, FIG. 4B and FIG. 4C, the upgrade policy received by the terminal device may be sent by the network device without improvement, or may be sent by the network device side after improvement.

Based on the solutions shown in FIG. 3a-1 and FIG. 3a-2 and FIG. 3b-1 and FIG. 3b-2 and the solution shown in FIG. 4A, FIG. 4B and FIG. 4C, FIG. 5A and FIG. 5B show an example of a schematic flowchart of a method for obtaining first permission information according to an embodiment of this application. The solution shown in FIG. 5A and FIG. 5B may be used in combination with the solutions in FIG. 3a-1 and FIG. 3a-2 and FIG. 3b-1 and FIG. 3b-2, or may be used in combination with the solution shown in FIG. 4A, FIG. 4B and FIG. 4C.

As shown in FIG. 5A and FIG. 5B, the method includes the following steps:

S501: The terminal device collects information about a first component, for example, software version information of the first component or hardware information of the first component.

The first component may be a component, an application, or the like in the terminal device, for example, an ECU module in the vehicle.

Possibly, a type of an upgrade package corresponding to the first component is the first type.

S502: The terminal device sends a fourth notification message, and may further send at least one of a fifth notification message or a sixth notification message.

The fourth notification message notifies the user to determine whether to allow execution of a first operation in an upgrade process that is based on the upgrade package of the first type.

The fifth notification message notifies the user to determine the period information of the first permission information.

The sixth notification message notifies the user to determine the type of the upgrade package to which the first permission information is applicable.

At least one of the fourth notification message, the fifth notification message, or the sixth notification message may be sent by the terminal device to the user interaction module, or may be sent by the OTA master module of the terminal device to the HMI module of the terminal device.

In a possible implementation, the foregoing three items may be sequentially displayed on a screen of the terminal device or a screen of the user interaction module according to a sequence, so that the user performs determination in sequence. The three items may be alternatively displayed at a time. This is not limited in this embodiment of this application.

S503: The user inputs at least one of the following items in the user interaction module: the first permission information of the first operation, the period information of the first permission information, and the type of the upgrade package to which the first permission information is applicable.

In the figure, an example in which the user inputs the first permission information of the first operation, the period information of the first permission information, and the type of the upgrade package to which the first permission information is applicable in the user interaction module is used for illustration.

S504: The user interaction module sends the first permission information of the first operation, the period information of the first permission information, and the type of the upgrade package to which the first permission information is applicable.

The several pieces of information in S504 may be sent by the user interaction module to the terminal device, or may be sent by the HMI module of the terminal device to the OTA master module.

In a possible implementation, the method may further include S505:

S505: The terminal device stores at least one of the following items: the obtained first permission information, the period information of the first permission information, or the type of the upgrade package to which the first permission information is applicable.

Through S505, the terminal device may store the foregoing information, for use in the subsequent upgrade process that is based on the second upgrade package.

In another possible implementation, the terminal device may send the foregoing information to the network device through S506, so that the network device stores the information for use in a subsequent process of the second upgrade package.

S506: The terminal device sends at least one of the following items to the network device: the first permission information, the period information of the first permission information, or the type of the upgrade package to which the first permission information is applicable.

S507: The network device stores at least one of the following items: the received first permission information, the first permission information, the period information of the first permission information, or the type of the upgrade package to which the first permission information is applicable.

Based on the solution shown in FIG. 5A and FIG. 5B, at least one of the following items: the first permission information corresponding to the first operation, the period information of the first permission information, or the type of the upgrade package to which the first permission information is applicable in the upgrade process that is based on the upgrade package of the first type may be obtained in advance. In this way, the foregoing information may be used in the upgrade process that is based on the second upgrade package, thereby improving a speed of the upgrade process that is based on the second upgrade package. In addition, the user may also be allowed to select the period information of the first permission information and the type of the upgrade package to which the first permission information is applicable, thereby providing more options for the user and laying a foundation for reducing notification messages sent to the user.

Based on the solution shown in FIG. 5A and FIG. 5B, FIG. 6A and FIG. 6B show an example of a schematic flowchart of a method for updating first permission information according to an embodiment of this application. The solution shown in FIG. 5A and FIG. 5B may be used in combination with the solutions in FIG. 3a-1 and FIG. 3a-2 and FIG. 3b-1 and FIG. 3b-2, or may be used in combination with the solution shown in FIG. 4A, FIG. 4B and FIG. 4C.

As shown in FIG. 6A and FIG. 6B, the method includes the following steps:

S601: The user inputs, in the user interaction module, at least one of the following items: updated first permission information corresponding to the first operation, period information of the updated first permission information, and a type of an upgrade package to which the updated first permission information is applicable.

S602: The user interaction module sends at least one of the following items: the updated first permission information of the first operation, the period information of the updated first permission information, and the type of the upgrade package to which the updated first permission information is applicable.

The several pieces of information in S602 may be sent by the user interaction module to the terminal device, or may be sent by the HMI module of the terminal device to the OTA master module.

In a possible implementation, the method may further include S603:

S603: The terminal device updates, based on the received information, at least one of the following items: the stored first permission information, the period information of the first permission information, or the type of the upgrade package to which the first permission information is applicable.

Through S603, the terminal device may store the latest first permission information, to provide a more flexible option for the user.

In another possible implementation, the terminal device may send the foregoing information to the network device through S604, so that the network device updates the first permission information and the like, for use in a subsequent process of the second upgrade package.

S604: The terminal device sends at least one of the following items to the network device: the updated first permission information, the period information of the updated first permission information, or the type of the upgrade package to which the updated first permission information is applicable.

S605: The network device updates, based on the received information, at least one of the following items: the stored first permission information, the period information of the first permission information, or the type of the upgrade package to which the first permission information is applicable.

Based on the solution shown in FIG. 6A and FIG. 6B, at least one of the following items: the first permission information, the period information of the first permission information, or the type of the upgrade package to which the first permission information is applicable may be updated, to provide more options for the user.

The terms "system" and "network" may be used interchangeably in embodiments of this application. "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a-b, a-c, b-c, or a-b-c, where a, b, and c may be singular or plural.

In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects. For example, the first permission information and the second permission information are merely used to distinguish different permission information, but do not indicate different priorities, importance, or the like of the two pieces of permission information.

It should be noted that, names of the foregoing messages are merely examples. With evolution of a communication technology, the name of any foregoing message may change. However, regardless of how the names of the messages change, provided that meanings of the messages are the same as those of the messages in this application, the messages fall within the protection scope of this application.

The foregoing mainly describes the solutions provided in this application from a perspective of interaction between network elements. It may be understood that, to implement the foregoing functions, each network element includes a corresponding hardware structure and/or software module for performing each function. A person skilled in the art should easily be aware that, with reference to units and algorithms steps in the examples described in embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

Based on the foregoing methods, FIG. 7 is a schematic diagram of a structure of a communication apparatus according to an embodiment of this application. As shown in FIG. 7, the communication apparatus may be a terminal device or a network device. Alternatively, the communication apparatus may be a chip or a circuit, such as a chip or a circuit that may be disposed in the terminal device, or a chip or a circuit that may be disposed in the network device.

The communication apparatus 1301 includes a processor 1302 and a transceiver 1303.

Further, the communication apparatus 1301 may include a memory 1304. In the figure, the memory 1304 is a dashed line, which further indicates that the memory is optional.

Further, the communication apparatus 1301 may include a bus system. The processor 1302, the memory 1304, and the transceiver 1303 may be connected through the bus system.

It should be understood that the processor 1302 may be a chip. For example, the processor 1302 may be a field programmable gate array (field programmable gate array, FPGA), an application specific integrated circuit (application specific integrated circuit, ASIC), a system on chip (system on chip, SoC), a central processor unit (central processor unit, CPU), a network processor (network processor, NP), a digital signal processing circuit (digital signal processor, DSP), a micro controller (micro controller unit, MCU), a programmable logic device (programmable logic device, PLD), or another integrated chip.

In an implementation process, steps in the methods may be implemented by using a hardware integrated logic circuit in the processor 1302, or by using instructions in a form of software. The steps of the method disclosed with reference to embodiments of this application may be directly performed by a hardware processor, or may be performed by using a combination of hardware in the processor 1302 and a software module. The software module may be located in a mature storage medium in the art such as a random access memory, a flash memory, a read-only memory, a programmable read-only memory, an electrically erasable programmable memory, or a register. The storage medium is located in the memory 1304, and the processor 1302 reads information in the memory 1304 and completes the steps in the foregoing methods in combination with hardware of the processor 1302.

It should be noted that the processor 1302 in this embodiment of this application may be an integrated circuit chip and has a signal processing capability. In an implementation process, steps in the foregoing method embodiments may be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by using a hardware decoding processor, or may be performed and completed by using a combination of hardware in the decoding processor and a software module. The software module may be located in a mature storage medium in the art such as a random access memory, a flash memory, a read-only memory, a programmable read-only memory, an electrically erasable programmable memory, or a register. The storage medium is located in the memory, and the processor reads information in the memory and accomplishes the steps in the foregoing methods in combination with hardware of the processor.

It may be understood that the memory 1304 in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Based on description used as an example instead of a limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any other proper types of memories.

When the communication apparatus 1301 corresponds to the network device in the foregoing methods, the memory 1304 is configured to store a computer-executable program, and the processor 1302 is configured to execute the computer-executable program stored in the memory 1304, to implement a related solution of the network device in any one or more corresponding methods shown in FIG. 1a to FIG. 6A and FIG. 6B.

When the communication apparatus 1301 is the foregoing network device, in a possible implementation, when the computer-executable program is invoked by the processor 1302, the processor 1302 is configured to: obtain first permission information corresponding to a first upgrade package, where the first permission information indicates whether to perform a first operation in an upgrade process that is based on the first upgrade package; and generate permission policy information for a second upgrade package based on the first permission information, where the permission policy information indicates whether a user is notified to perform the first operation in an upgrade process that is based on a second upgrade package.

When the communication apparatus 1301 is the foregoing network device, in another possible implementation, the processor 1302 is specifically configured to: obtain period information of the first permission information; and generate, based on the first permission information and the period information of the first permission information, permission policy information corresponding to the second upgrade package.

When the communication apparatus 1301 corresponds to the terminal device in the foregoing methods, the memory 1304 is configured to store a computer-executable program, and the processor 1302 is configured to execute the computer-executable program stored in the memory 1304, to implement a related solution of the terminal device in any one or more corresponding methods shown in FIG. 1a to FIG. 6A and FIG. 6B

.

When the communication apparatus 1301 is the foregoing terminal device, in a possible implementation, when the computer-executable program is invoked by the processor 1302, the processor 1302 is configured to: receive, through the transceiver 1303, permission policy information for a second upgrade package, where the permission policy information indicates whether a user is notified to perform a first operation in an upgrade process that is based on the second upgrade package; obtain first permission information corresponding to a first upgrade package, where the first permission information indicates whether to perform the first operation in an upgrade process that is based on the first upgrade package; and determine, based on the first permission information and the permission policy information, whether to notify the user to perform the first operation in the upgrade process that is based on the second upgrade package.

When the communication apparatus 1301 is the foregoing terminal device, in another possible implementation, the processor 1302 is specifically configured to: perform the first operation when the permission policy information indicates to notify the user to perform the first operation in the upgrade process that is based on the second upgrade package, and the first permission information indicates to perform the first operation in the upgrade process that is based on the first upgrade package.

When the communication apparatus 1301 is the foregoing terminal device, in another possible implementation, the processor 1302 is specifically configured to: when the permission policy information indicates to notify the user to perform the first operation in the upgrade process that is based on the second upgrade package, obtain period information of the first permission information; and determine, based on the first permission information and the period information of the first permission information, whether to notify the user to perform the first operation in the upgrade process that is based on the second upgrade package.

When the communication apparatus 1301 is the foregoing terminal device, in another possible implementation, a period indicated by the period information of the first permission information is a validity period of the first permission information; and the processor 1302 is specifically configured to: perform the first operation when the first permission information indicates to perform the first operation in the upgrade process that is based on the first upgrade package, and the upgrade process based on the second upgrade package is to be performed within the period indicated by the period information of the first permission information.

When the communication apparatus 1301 is the foregoing terminal device, in another possible implementation, the processor 1302 is specifically configured to: when the first permission information indicates to perform the first operation in the upgrade process that is based on the first upgrade package, and the upgrade process based on the second upgrade package is not to be performed within the period indicated by the period information of the first permission information, send a third notification message through the transceiver 1303 in the upgrade process that is based on the second upgrade package, where the third notification message notifies the user to perform the first operation; receive second permission information through the transceiver 1303, where the second permission information indicates whether to perform the first operation in the upgrade process that is based on the second upgrade package; and perform the first operation when the second permission information indicates to perform the first operation in the upgrade process that is based on the second upgrade package.

When the communication apparatus 1301 is the foregoing terminal device, in another possible implementation, the processor 1302 is further configured to: send a first notification message through the transceiver 1303, where the first notification message notifies the user to input period information of the second permission information, and the terminal device receives the period information of the second permission information; or send a second notification message through the transceiver 1303, where the second notification message notifies the user to input a type of an upgrade package to which the second permission information is applicable.

When the communication apparatus 1301 corresponds to the terminal device in the foregoing methods, the memory 1304 is configured to store a computer-executable program, and the processor 1302 is configured to execute the computer-executable program stored in the memory 1304, to implement a related solution of the terminal device in any one or more corresponding methods shown in FIG. 1a to FIG. 6A and FIG. 6B.

When the communication apparatus 1301 is the foregoing terminal device, in a possible implementation, when the computer-executable program is invoked by the processor 1302, the processor 1302 is configured to: send a fourth notification message through the transceiver 1303, where the fourth notification message notifies the user to input first permission information, and the first permission information indicates whether to perform the first operation in an upgrade process that is based on an upgrade package of a first type; receive the first permission information through the transceiver 1303; send a fifth notification message through the transceiver 1303, where the fifth notification message notifies the user to input period information corresponding to the first permission information; receive the period information of the first permission information through the transceiver 1303; send a sixth notification message through the transceiver 1303, where the sixth notification message notifies the user to input a type of an upgrade package to which the first permission information is applicable; and receive, through the transceiver 1303, information used to indicate the type of the upgrade package to which the first permission information is applicable.

For a concept, an explanation, a detailed description, and other steps with respect to the communication apparatus that are related to the technical solutions provided in embodiments of this application, refer to descriptions of the content in the foregoing methods or another embodiment. Details are not described herein.

Based on the foregoing methods, FIG. 8 is a schematic diagram of a structure of a communication apparatus according to an embodiment of this application. As shown in FIG. 8, the communication apparatus 1401 may include a communication interface 1403 and a processor 1402. Further, the communication apparatus 1401 may include a memory 1404. In the figure, the memory 1404 is a dashed line, which further indicates that the memory is optional. The communication interface 1403 is configured to input and/or output information. The processor 1402 is configured to execute a computer program or instructions, to enable the communication apparatus 1401 to implement the method on the terminal device side in the related solutions in FIG. 1a to FIG. 6A and FIG. 6B, or enable the communication apparatus 1401 to implement the method on the network device side in the related solutions in FIG. 1a to FIG. 6A and FIG. 6B. In this embodiment of this application, the communication interface 1403 may implement the solution implemented by the transceiver 1303 in FIG. 7. The processor 1402 may implement the solution implemented by the processor 1302 in FIG. 7. The memory 1404 may implement the solution implemented by the memory 1304 in FIG. 7. Details are not described herein again.

Based on the foregoing embodiments and a same concept, FIG. 9 is a schematic diagram of a communication apparatus according to an embodiment of this application. As shown in FIG. 9, the communication apparatus 1501 may be a terminal device or a network device. Alternatively, the communication apparatus 1501 may be a chip or a circuit, such as a chip or a circuit that may be disposed in the terminal device or the network device.

The communication apparatus 1501 includes a processing unit 1502 and a communication unit 1503. Further, the communication apparatus 1501 may include a storage unit 1504, or may not include a storage unit 1504. In the figure, the storage unit 1504 is a dashed line, which further indicates that the memory is optional.

The communication apparatus may correspond to the terminal device in the foregoing methods. The communication apparatus may implement steps performed by the terminal device in any one or more corresponding methods shown in FIG. 1a to FIG. 6A and FIG. 6B. The communication apparatus may include the processing unit 1502, the communication unit 1503, and the storage unit 1504.

When the communication apparatus 1501 corresponds to the network device in the foregoing methods, the storage unit 1504 is configured to store a computer-executable program, and the processing unit 1502 is configured to execute the computer-executable program stored in the storage unit 1504, to implement a related solution of the network device in any one or more corresponding methods shown in FIG. 1a to FIG. 6A and FIG. 6B.

When the communication apparatus 1501 is the foregoing network device, in a possible implementation, when the computer-executable program is invoked by the processing unit 1502, the processing unit 1502 is configured to: obtain first permission information corresponding to a first upgrade package, where the first permission information indicates whether to perform a first operation in an upgrade process that is based on the first upgrade package; and generate permission policy information for a second upgrade package based on the first permission information, where the permission policy information indicates whether a user is notified to perform the first operation in an upgrade process that is based on the second upgrade package.

When the communication apparatus 1501 corresponds to the terminal device in the foregoing methods, the storage unit 1504 is configured to store a computer-executable program, and the processing unit 1502 is configured to execute the computer-executable program stored in the storage unit 1504, to implement a related solution of the terminal device in any one or more corresponding methods shown in FIG. 1a to FIG. 6A and FIG. 6B.

When the communication apparatus 1501 is the foregoing terminal device, in a possible implementation, when the computer-executable program is invoked by the processing unit 1502, the processing unit 1502 is configured to: receive, through the communication unit 1503, permission policy information for a second upgrade package, where the permission policy information indicates whether a user is notified to perform a first operation in an upgrade process that is based on the second upgrade package; obtain first permission information corresponding to a first upgrade package, where the first permission information indicates whether to perform the first operation in an upgrade process that is based on the first upgrade package; and determine, based on the first permission information and the permission policy information, whether to notify the user to perform the first operation in the upgrade process that is based on the second upgrade package.

When the communication apparatus 1501 corresponds to the terminal device in the foregoing methods, the storage unit 1504 is configured to store a computer-executable program, and the processing unit 1502 is configured to execute the computer-executable program stored in the storage unit 1504, to implement a related solution of the terminal device in any one or more corresponding methods shown in FIG. 1a to FIG. 6A and FIG. 6B.

When the communication apparatus 1501 is the foregoing terminal device, in a possible implementation, when the computer-executable program is invoked by the processing unit 1502, the processing unit 1502 is configured to: send a fourth notification message through the communication unit 1503, where the fourth notification message notifies the user to input first permission information, and the first permission information indicates whether to perform a first operation in an upgrade process that is based on an upgrade package of a first type; receive the first permission information through the communication unit 1503; send a fifth notification message through the communication unit 1503, where the fifth notification message notifies the user to input period information corresponding to the first permission information; receive the period information of the first permission information through the communication unit 1503; send a sixth notification message through the communication unit 1503, where the sixth notification message notifies the user to input a type of an upgrade package to which the first permission information is applicable; and receive, through the communication unit 1503, information used to indicate the type of the upgrade package to which the first permission information is applicable.

The processing unit 1502 may be a processor or a controller, such as a general-purpose central processing unit (central processing unit, CPU), a general-purpose processor, digital signal processing (digital signal processing, DSP), an application specific integrated circuit (application specific integrated circuits, ASIC), a field programmable gate array (field programmable gate array, FPGA), or another programmable logic device, a transistor logic device, a hardware component, or any combination thereof. The processing unit 1502 may implement or execute various example logical blocks, modules, and circuits described with reference to content disclosed in this application. Alternatively, the processor may be a combination for implementing a computing function, for example, a combination including one or more microprocessors, or a combination of a DSP and a microprocessor. The storage unit 1504 may be a memory. The communication unit 1503 is an interface circuit of the apparatus, and is configured to receive a signal from another apparatus. For example, when the apparatus is implemented in a form of a chip, the communication unit 1503 is an interface circuit that is of the chip and that is configured to receive a signal from another chip or apparatus, or the communication unit 1503 is an interface circuit that is of the chip and that is configured to send a signal to another chip or apparatus.

The communication apparatus 1501 may be the terminal device or the network device in any one of the foregoing embodiments, or may be a chip configured to search for a cell. For example, when the communication apparatus 1501 is a terminal device or a network device, the processing unit 1502 may be, for example, a processor, and the communication unit 1503 may be, for example, a transceiver. Optionally, the transceiver may include a radio frequency circuit, and the storage unit may be, for example, a memory. For example, when the communication apparatus 1501 is a chip configured to search for a cell, the processing unit 1502 may be, for example, a processor, and the communication unit 1503 may be, for example, an input/output interface, a pin, or a circuit. The processing unit 1502 may execute computer-executable instructions stored in the storage unit. Optionally, the storage unit is a storage unit in the chip, such as a register or a cache. Alternatively, the storage unit may be a storage unit that is in a session management network element and that is located outside the chip, for example, a read-only memory (read-only memory, ROM), another type of static storage device that can store static information and instructions, or a random access memory (random access memory, RAM).

For a concept, an explanation, a detailed description, and other steps with respect to the communication apparatus that are related to the technical solutions provided in embodiments of this application, refer to descriptions of the content in the foregoing methods or another embodiment. Details are not described herein.

It may be understood that, for a function of each unit in the foregoing communication apparatus 1501, reference may be made to implementation of a corresponding method embodiment. Details are not described herein again.

It should be understood that division of units in the communication apparatus is merely logical function division. During actual implementation, all or some of the units may be integrated into one physical entity or may be physically separated. In this embodiment of this application, the communication unit 1503 may be implemented by the transceiver 1303 in FIG. 7, and the processing unit 1502 may be implemented by the processor 1302 in FIG. 7.

Based on the method provided in embodiments of this application, this application further provides a computer program product. The computer program product includes computer program code or instructions. When the computer program code or instructions is/are run on a computer, the computer is enabled to perform the method in any one of the embodiments shown in FIG. 1a to FIG. 6A and FIG. 6B.

Based on the method provided in embodiments of this application, this application further provides a computer-readable storage medium. The computer-readable storage medium stores program code. When the program code is run on a computer, the computer is enabled to perform the method in any one of the embodiments shown in FIG. 1a to FIG. 6A and FIG. 6B.

Based on the method provided in embodiments of this application, this application further provides a chip system. The chip system may include a processor. The processor is coupled to a memory, and may be configured to perform the method in any one of the embodiments shown in FIG. 1a to FIG. 6A and FIG. 6B. Optionally, the chip system further includes a memory. The memory is configured to store a computer program (which may also be referred to as code or instructions). The processor is configured to invoke the computer program from the memory and run the computer program, so that a device in which the chip system is installed is enabled to perform the method in any one of the embodiments shown in FIG. 1a to FIG. 6A and FIG. 6B.

Based on the method provided in embodiments of this application, this application further provides a system. The system includes the foregoing one or more terminal devices and the foregoing one or more network devices.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, some or all of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

It should be noted that a part of this patent application document includes copyrightprotected content. The copyright owner reserves the copyright except copies are made for the patent documents or the recorded content of the patent documents in the Patent Office.

The network device and the terminal device in the foregoing apparatus embodiments correspond to the network device or the terminal device in the method embodiments. A corresponding module or unit performs a corresponding step. For example, the communication unit (the transceiver) performs a receiving or sending step in the method embodiments, and a step other than the sending step and the receiving step may be performed by the processing unit (the processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected according to actual requirements to achieve the objectives of the solutions of the embodiments.

In addition, function units in embodiments of this application may be integrated into one processing unit, each of the units may exist alone physically, or two or more units are integrated into one unit. When functions are implemented in a form of a software function unit and sold or used as an independent product, the functions may be stored in a computer-readable storage medium.

The foregoing descriptions are merely specific embodiments of this application, but are not intended to limit a protection scope of this application. Any variation or replacement readily figured out by a person skilled in the art within the technical scope disclosed in this application should fall within the protection scope of this application. Therefore, the protection scope of this application shall be subject to the protection scope of the claims.

## Claims

1. A method for obtaining permission information of a user in an upgrade process, comprising:
obtaining, by a network device, first permission information corresponding to a first upgrade package, wherein the first permission information indicates whether to perform a first operation in an upgrade process that is based on the first upgrade package; and
generating, by the network device, permission policy information for a second upgrade package based on the first permission information, wherein the permission policy information indicates whether to notify the user to perform the first operation in an upgrade process that is based on the second upgrade package.

2. The method according to claim 1, wherein when the first permission information indicates to perform the first operation in the upgrade process that is based on the first upgrade package,
the permission policy information indicates that there is no need to notify the user to perform the first operation in the upgrade process that is based on the second upgrade package.

3. The method according to claim 1, wherein the generating, by the network device, permission policy information for a second upgrade package based on the first permission information comprises:
obtaining, by the network device, period information of the first permission information; and
generating, by the network device based on the first permission information and the period information of the first permission information, the permission policy information corresponding to the second upgrade package.

4. The method according to claim 3, wherein a period indicated by the period information of the first permission information is a validity period of the first permission information; and
when the first permission information indicates to perform the first operation in the upgrade process that is based on the first upgrade package,
the upgrade process based on the second upgrade package is to be performed within the period indicated by the period information of the first permission information, and the permission policy information indicates that there is no need to notify the user to perform the first operation in the upgrade process that is based on the second upgrade package; or
the upgrade process based on the second upgrade package is not to be performed within the period indicated by the period information of the first permission information, and the permission policy information indicates to notify the user to perform the first operation in the upgrade process that is based on the second upgrade package.

5. The method according to any one of claims 1 to 4, wherein when the permission policy information indicates to notify the user to perform the first operation in the upgrade process that is based on the second upgrade package, the permission policy information further comprises at least one of the following content:
first indication information, wherein the first indication information indicates a terminal device to send a first notification message, the first notification message notifies the user to determine period information of second permission information, and the second permission information is information that indicates whether execution of the first operation is allowed and that is input by the user in the upgrade process that is based on the second upgrade package; or
second indication information, wherein the second indication information indicates a terminal device to send a second notification message, and the second notification message notifies the user to determine a type of an upgrade package to which second permission information is applicable.

6. The method according to any one of claims 1 to 5, wherein a type of the first upgrade package is the same as a type of the second upgrade package.

7. A method for obtaining permission information of a user in an upgrade process, comprising:
receiving, by a terminal device, permission policy information for a second upgrade package, wherein the permission policy information indicates whether to notify the user to perform a first operation in an upgrade process that is based on the second upgrade package;
obtaining, by the terminal device, first permission information corresponding to a first upgrade package, wherein the first permission information indicates whether to perform the first operation in an upgrade process that is based on the first upgrade package; and
determining, by the terminal device based on the first permission information and the permission policy information, whether to notify the user to perform the first operation in the upgrade process that is based on the second upgrade package.

8. The method according to claim 7, wherein the determining, by the terminal device based on the first permission information and the permission policy information, whether to notify the user to perform the first operation in the upgrade process that is based on the second upgrade package comprises:
when the permission policy information indicates to notify the user to perform the first operation in the upgrade process that is based on the second upgrade package, and
when the first permission information indicates to perform the first operation in the upgrade process that is based on the first upgrade package,
performing, by the terminal device, the first operation.

9. The method according to claim 7, wherein the determining, by the terminal device based on the first permission information and the permission policy information, whether to notify the user to perform the first operation in the upgrade process that is based on the second upgrade package comprises:
when the permission policy information indicates to notify the user to perform the first operation in the upgrade process that is based on the second upgrade package,
obtaining, by the terminal device, period information of the first permission information; and
determining, by the terminal device based on the first permission information and the period information of the first permission information, whether to notify the user to perform the first operation in the upgrade process that is based on the second upgrade package.

10. The method according to claim 9, wherein a period indicated by the period information of the first permission information is a validity period of the first permission information; and
the determining, by the terminal device based on the first permission information and the period information of the first permission information, whether to notify the user to perform the first operation in the upgrade process that is based on the second upgrade package comprises:
when the first permission information indicates to perform the first operation in the upgrade process that is based on the first upgrade package, and the upgrade process based on the second upgrade package is to be performed within the period indicated by the period information of the first permission information,
performing, by the terminal device, the first operation.

11. The method according to claim 9 or 10, wherein the determining, by the terminal device based on the first permission information and the period information of the first permission information, whether to notify the user to perform the first operation in the upgrade process that is based on the second upgrade package comprises:
when the first permission information indicates to perform the first operation in the upgrade process that is based on the first upgrade package, and the upgrade process based on the second upgrade package is not to be performed within the period indicated by the period information of the first permission information,
sending, by the terminal device, a third notification message in the upgrade process that is based on the second upgrade package, wherein the third notification message notifies the user to perform the first operation;
receiving, by the terminal device, second permission information, wherein the second permission information indicates whether to perform the first operation in the upgrade process that is based on the second upgrade package; and
when the second permission information indicates to perform the first operation in the upgrade process that is based on the second upgrade package, performing, by the terminal device, the first operation.

12. The method according to claim 11, wherein after the receiving, by the terminal device, second permission information, the method further comprises:
sending, by the terminal device, a first notification message, wherein the first notification message notifies the user to input period information of the second permission information; and receiving, by the terminal device, the period information of the second permission information; or
sending, by the terminal device, a second notification message, wherein the second notification message notifies the user to input a type of an upgrade package to which the second permission information is applicable.

13. The method according to any one of claims 7 to 12, wherein a type of the first upgrade package is the same as a type of the second upgrade package.

14. A method for obtaining permission information of a user in an upgrade process, comprising:
sending, by a terminal device, a fourth notification message, wherein the fourth notification message notifies the user to input first permission information, and the first permission information indicates whether to perform a first operation in an upgrade process that is based on an upgrade package of a first type;
receiving, by the terminal device, the first permission information;
sending, by the terminal device, a fifth notification message, wherein the fifth notification message notifies the user to input period information corresponding to the first permission information;
receiving, by the terminal device, the period information of the first permission information;
sending, by the terminal device, a sixth notification message, wherein the sixth notification message notifies the user to input a type of an upgrade package to which the first permission information is applicable; and
receiving, by the terminal device, information indicating the type of the upgrade package to which the first permission information is applicable.

15. A network device, comprising a processor and a memory, wherein
the memory is configured to store a computer-executable program; and
when the computer-executable program is invoked by the processor, the processor is configured to:
obtain first permission information corresponding to a first upgrade package, wherein the first permission information indicates whether to perform a first operation in an upgrade process that is based on the first upgrade package; and
generate, based on the first permission information, permission policy information for a second upgrade package, wherein the permission policy information indicates whether to notify a user to perform the first operation in an upgrade process that is based on the second upgrade package.

16. The network device according to claim 15, wherein when the first permission information indicates to perform the first operation in the upgrade process that is based on the first upgrade package,
the permission policy information indicates that there is no need to notify the user to perform the first operation in the upgrade process that is based on the second upgrade package.

17. The network device according to claim 15, wherein the processor is specifically configured to:
obtain period information of the first permission information; and
generate, based on the first permission information and the period information of the first permission information, the permission policy information corresponding to the second upgrade package.

18. The network device according to claim 17, wherein a period indicated by the period information of the first permission information is a validity period of the first permission information; and
when the first permission information indicates to perform the first operation in the upgrade process that is based on the first upgrade package,
the upgrade process based on the second upgrade package is to be performed within the period indicated by the period information of the first permission information, and the permission policy information indicates that there is no need to notify the user to perform the first operation in the upgrade process that is based on the second upgrade package; or
the upgrade process based on the second upgrade package is not to be performed within the period indicated by the period information of the first permission information, and the permission policy information indicates to notify the user to perform the first operation in the upgrade process that is based on the second upgrade package.

19. The network device according to any one of claims 15 to 18, wherein when the permission policy information indicates to notify the user to perform the first operation in the upgrade process that is based on the second upgrade package, the permission policy information further comprises at least one of the following content:
first indication information, wherein the first indication information indicates a terminal device to send a first notification message, the first notification message notifies the user to determine period information of second permission information, and the second permission information is information that indicates whether execution of the first operation is allowed and that is input by the user in the upgrade process that is based on the second upgrade package; or
second indication information, wherein the second indication information indicates a terminal device to send a second notification message, and the second notification message notifies the user to determine a type of an upgrade package to which second permission information is applicable.

20. The network device according to any one of claims 15 to 19, wherein a type of the first upgrade package is the same as a type of the second upgrade package.

21. A terminal device, comprising a processor, a memory, and a communication interface, wherein
the memory is configured to store a computer-executable program; and
when the computer-executable program is invoked by the processor, the processor is configured to:
receive permission policy information for a second upgrade package through the communication interface, wherein the permission policy information indicates whether to notify a user to perform a first operation in an upgrade process that is based on the second upgrade package;
obtain first permission information corresponding to a first upgrade package, wherein the first permission information indicates whether to perform the first operation in an upgrade process that is based on the first upgrade package; and
determine, based on the first permission information and the permission policy information, whether to notify the user to perform the first operation in the upgrade process that is based on the second upgrade package.

22. The terminal device according to claim 21, wherein the processor is specifically configured to:
when the permission policy information indicates to notify the user to perform the first operation in the upgrade process that is based on the second upgrade package,
and when the first permission information indicates to perform the first operation in the upgrade process that is based on the first upgrade package,
perform the first operation.

23. The terminal device according to claim 21, wherein the processor is specifically configured to:
when the permission policy information indicates to notify the user to perform the first operation in the upgrade process that is based on the second upgrade package,
obtain period information of the first permission information; and
determine, based on the first permission information and the period information of the first permission information, whether to notify the user to perform the first operation in the upgrade process that is based on the second upgrade package.

24. The terminal device according to claim 23, wherein a period indicated by the period information of the first permission information is a validity period of the first permission information; and
the processor is specifically configured to:
when the first permission information indicates to perform the first operation in the upgrade process that is based on the first upgrade package, and the upgrade process based on the second upgrade package is to be performed within the period indicated by the period information of the first permission information,
perform the first operation.

25. The terminal device according to claim 23 or 24, wherein the processor is specifically configured to:
when the first permission information indicates to perform the first operation in the upgrade process that is based on the first upgrade package, and the upgrade process based on the second upgrade package is not to be performed within the period indicated by the period information of the first permission information,
send a third notification message through the communication interface in the upgrade process that is based on the second upgrade package, wherein the third notification message notifies the user to perform the first operation;
receive second permission information through the communication interface, wherein the second permission information indicates whether to perform the first operation in the upgrade process that is based on the second upgrade package; and
when the second permission information indicates to perform the first operation in the upgrade process that is based on the second upgrade package, perform the first operation.

26. The terminal device according to claim 25, wherein the processor is further configured to:
send a first notification message through the communication interface, wherein the first notification message notifies the user to input period information of the second permission information; and the terminal device receives the period information of the second permission information; or
send a second notification message through the communication interface, wherein the second notification message notifies the user to input a type of an upgrade package to which the second permission information is applicable.

27. The terminal device according to any one of claims 21 to 26, wherein a type of the first upgrade package is the same as a type of the second upgrade package.

28. A terminal device, comprising a processor, a memory, and a communication interface, wherein
the memory is configured to store a computer-executable program; and
when the computer-executable program is invoked by the processor, the processor is configured to perform the following steps through the communication interface:
sending a fourth notification message, wherein the fourth notification message notifies a user to input first permission information, and the first permission information indicates whether to perform a first operation in an upgrade process that is based on an upgrade package of a first type;
receiving the first permission information;
sending a fifth notification message, wherein the fifth notification message notifies the user to input period information corresponding to the first permission information;
receiving the period information of the first permission information;
sending a sixth notification message, wherein the sixth notification message notifies the user to input a type of an upgrade package to which the first permission information is applicable; and
receiving information indicating the type of the upgrade package to which the first permission information is applicable.

29. A computer-readable storage medium, wherein the computer-readable storage medium stores a computer-executable program; and when the computer-executable program is invoked by a computer, the computer is enabled to perform the method according to any one of claims 1 to 6, the method according to any one of claims 7 to 13, or the method according to claim 14.

30. A chip system, comprising:
a communication interface, configured to input and/or output information; and
a processor, configured to execute a computer-executable program, to enable a device on which the chip system is installed to perform the method according to any one of claims 1 to 6, perform the method according to any one of claims 7 to 13, or perform the method according to claim 14.

31. A computer program product, wherein the computer program product comprises computer program code, and when the computer program code is run on a computer, the computer is enabled to implement the method according to any one of claims 1 to 6, implement the method according to any one of claims 7 to 13, or implement the method according to claim 14.
